# EUROPEAN PATENT APPLICATION

(11) **EP 4 797 840 A1**
(43) Date of publication of application: **26.08.2026**
(21) Application number: 23957418.9
(22) Date of filing: 10.11.2023
(51) Int. Cl.: H04W 72/0457

(54) **COMMUNICATION METHOD IN WIRELESS NETWORK, TERMINAL DEVICE, AND CHIP SYSTEM**

(30) Priority: 02.11.2023 CN 202311453224
(71) Applicant: Honor Device Co., Ltd., Shenzhen, Guangdong 518040 (CN)
(72) Inventor: LI, Haibo, Shenzhen, Guangdong 518040 (CN)
(74) Representative: Isarpatent
(86) International application number: PCT/CN2023/131112
(87) International publication number: WO 2025/091563

(57) **Abstract**

Embodiments of this application provide a communication method in a wireless network, a terminal device, and a chip system. The method includes: A terminal device receives a radio resource control RRC reconfiguration message sent by a first cell belonging to a first wireless network, where the RRC reconfiguration message carries first configuration information, and the first configuration information includes a second parameter item with a configuration abnormality; and the terminal device triggers an RLF procedure when the second parameter item exists in a preset list in the RRC reconfiguration message; or the terminal device sends an RRC reconfiguration complete message in response to the RRC reconfiguration message to the first cell when the second parameter item does not exist in a preset list in the RRC reconfiguration message. According to the method, a success rate of a terminal service in the wireless network can be improved.

## Description

This application claims priority to Chinese Patent Application No. 202311453224.3, filed with the China National Intellectual Property Administration on November 2, 2023 and entitled "COMMUNICATION METHOD IN WIRELESS NETWORK, TERMINAL DEVICE, AND CHIP SYSTEM", which is incorporated herein by reference in its entirety.

### TECHNICAL FIELD

This application relates to the terminal device communication field, and specifically, to a communication method in a wireless network, a terminal device, and a chip system.

### BACKGROUND

Currently, a 5th generation mobile communication network (5G network) gradually becomes commercially available. When using a terminal device, a user can not only access the Internet via the 5G network, but also make a call via the 5G network. For example, in the 5G network, voice over new radio (voice over new radio, VONR) is used to implement a call service, and thus user experience is greatly improved. However, compared with a mature 4G long term evolution (long term evolution, LTE) network, in the 5G, the VONR has some network compatibility problems, and consequently, the terminal device may unsuccessfully execute a service.

For example, the call service is used as an example. A terminal device (for example, a mobile phone) supporting the 5G network is usually unreachable. For example, when a calling terminal calls a called terminal, the calling terminal broadcasts a reminder that the call is temporarily unreachable. If a missed call SMS reminder service is enabled on a called side, there is a missed call SMS reminder.

### SUMMARY

This application provides a communication method in a wireless network, a terminal device, and a chip system, to improve a success rate of a terminal service in the wireless network.

According to a first aspect, this application provides a communication method in a wireless network. The method includes: A terminal device receives a radio resource control RRC reconfiguration message sent by a first cell belonging to a first wireless network, where the RRC reconfiguration message carries first configuration information, and the first configuration information includes a second parameter item with a configuration abnormality; and the terminal device triggers an RLF procedure when the second parameter item exists in a preset list in the RRC reconfiguration message; or the terminal device sends an RRC reconfiguration complete message in response to the RRC reconfiguration message to the first cell when the second parameter item does not exist in a preset list in the RRC reconfiguration message.

When the terminal device camps on the first cell through cell search and access, when there is a service request, for example, when there is an incoming call, the first cell may send a service request to the terminal device, then the terminal device requests to establish an RRC connection with the first cell, and the first cell may deliver the RRC reconfiguration message to the terminal device. The RRC reconfiguration message may include the preset list, and only a parameter item that exists in the preset list is a parameter item to be actually used by the terminal device in a subsequent service. If a parameter item does not exist in the preset list, even if the parameter item is configured at another location in the RRC reconfiguration message, the parameter item is not to be used by the terminal device in the subsequent service.

Therefore, when the RRC reconfiguration message includes the second parameter item with a configuration abnormality, if the second parameter item with an abnormality exists in the preset list, it indicates that the terminal device subsequently uses the second parameter item with an abnormality, which may cause a failure of a terminal service. In this case, the terminal device may trigger the RLF procedure. If the second parameter item with an abnormality does not exist in the preset list, it indicates that the terminal device does not subsequently use the second parameter item with an abnormality. In this case, the terminal device may normally return the RRC reconfiguration complete message, to improve a success rate of a terminal service.

In some implementations, the second parameter item is a first pucch resource Id, and a pucch resource Id corresponding to the first pucch resource Id is a first value.

In some implementations, the first value is 40. That is, the pucch resource Id 40 is a parameter item with a configuration abnormality.

In some implementations, that the first configuration information includes a second parameter item with a configuration abnormality includes: configuration information corresponding to the second parameter item includes a first parameter item, and the first parameter item is a parameter item with a configuration abnormality.

In some implementations, the first parameter item with a configuration abnormality may be a startingPRB field with a configuration abnormality, and the startingPRB field with a configuration abnormality is a corresponding startingPRB field when a pucch resource Id in the first configuration information is a first value.

For example, a starting PRB configured for the pucch resource Id 40 is abnormal because the starting PRB is configured to be 110, which exceeds a range (for example, the specified range is 0 to 63) specified for LocationAndBandwidth in the RRC reconfiguration message.

In some implementations, the first configuration information includes configuration information corresponding to a first bandwidth part BWP, and the configuration information corresponding to the first BWP includes the second parameter item.

In some implementations, the first BWP is a BWP whose BWP ID is a second value. For example, when the first cell delivers two BWPs (a BWP1 and a BWP2) to the terminal device, a configuration parameter of the BWP2 is abnormal.

In some implementations, the first BWP is a BWP that needs to be currently activated and that is configured by the first cell for the terminal device.

In some implementations, the first BWP is a BWP that does not need to be currently activated and that is configured by the first cell for the terminal device.

In some implementations, the preset list is a parameter list included in a resource list resourceList field in a resourceSetToAddModList field in the RRC reconfiguration message.

For example, a configuration for a BWP in the RRC reconfiguration message includes a parameter list resourceSetToAddModList, a plurality of resource lists resourceLists are defined in resourceSetToAddModList, and each resourceList includes a plurality of resource Ids. Only a parameter item corresponding to a resource Id that exists in the resourceList is a parameter item actually to be used by the terminal device in the subsequent service. If a parameter item does not exist in the resourceList of resourceSetToAddModList, even if the parameter item is configured at another location in the RRC reconfiguration message, the parameter item is not to be used by the terminal device in the subsequent service.

In some implementations, after the terminal device receives the radio resource control RRC reconfiguration message sent by the first cell belonging to the first wireless network, the method further includes: the terminal device verifies the received RRC reconfiguration message;

that the terminal device triggers the RLF procedure when the second parameter item exists in a preset list in the RRC reconfiguration message includes: The terminal device triggers the RLF procedure if the second parameter item exists in the preset list in the RRC reconfiguration message when the terminal device verifies that a configuration corresponding to the first parameter item is abnormal; and
that the terminal device sends the RRC reconfiguration complete message in response to the RRC reconfiguration message to the first cell when the second parameter item does not exist in the preset list in the RRC reconfiguration message includes: The terminal device sends the RRC reconfiguration complete message to the first cell if the second parameter item does not exist in the preset list in the RRC reconfiguration message when the terminal device verifies that the configuration corresponding to the first parameter item is abnormal.

In this case, it may be understood that if the second parameter item does not exist in the preset list in the RRC reconfiguration message when the configuration corresponding to the first parameter item is abnormal, the terminal device determines that a final verification result of the first parameter item is correct, and therefore, the terminal device sends the RRC reconfiguration complete message to the first cell.

In some implementations, that the terminal device triggers the RLF procedure when the second parameter item exists in the preset list in the RRC reconfiguration message includes: the terminal device verifies the configuration corresponding to the first parameter item when the second parameter item exists in the preset list in the RRC reconfiguration message, and the terminal device triggers the RLF procedure when it is verified that the configuration corresponding to the first parameter item is abnormal.

That the terminal device sends the RRC reconfiguration complete message in response to the RRC reconfiguration message to the first cell when the second parameter item does not exist in the preset list in the RRC reconfiguration message includes: when the second parameter item does not exist in the preset list in the RRC reconfiguration message, the terminal device ignores verification of the configuration corresponding to the first parameter item, and the terminal device sends the RRC reconfiguration complete message to the first cell.

That is, when the terminal device performs parameter verification (verification may also be referred to as a check or identification) on configuration information corresponding to a pucch resource Id in the RRC reconfiguration message, the terminal device may check only a pucch resource Id that exists in the preset list (namely, resourceList in resourceSetToAddModList). For a pucch resource Id that does not exist in the preset list, the terminal device may ignore a check of a configuration of the pucch resource Id, to reduce processing power consumption of the terminal device.

In some implementations, that the terminal device sends the RRC reconfiguration complete message in response to the RRC reconfiguration message to the first cell when the second parameter item does not exist in the preset list in the RRC reconfiguration message includes: the terminal device sends the RRC reconfiguration complete message to the first cell when the second parameter item does not exist in the preset list in the RRC reconfiguration message and the terminal device is currently establishing a call.

That is, when receiving the RRC reconfiguration message, the terminal device may determine whether the parameter item pucch resource Id with a configuration abnormality is in the preset list. If the parameter item pucch resource Id with a configuration abnormality is not in the preset list and the terminal device is currently establishing a call, the terminal device may normally return the RRC reconfiguration complete message, thereby ensuring that a current call service is normally performed, and improving a success rate of the call service.

In some implementations, the method further includes: the terminal device triggers the RLF procedure when the second parameter item does not exist in the preset list in the RRC reconfiguration message and the terminal device is not currently establishing a call.

In some implementations, that the terminal device triggers the RLF procedure when the second parameter item exists in the preset list in the RRC reconfiguration message includes: when the second parameter item exists in the preset list in the RRC reconfiguration message and a quantity of abnormalities in the first configuration information sent by the first cell exceeds a preset threshold, the terminal device triggers the RLF procedure, and bars selection of the first cell as a serving cell in preset duration.

That is, when receiving the RRC reconfiguration message, the terminal device may determine whether the parameter item pucch resource Id with a configuration abnormality is in the preset list. If the parameter item pucch resource Id with a configuration abnormality is in the preset list, the terminal device may count a quantity of abnormalities of the first cell. If a quantity of configuration abnormalities delivered by the cell within preset time exceeds the preset threshold, the terminal device may BAR the cell for a period of time (that is, bar selection of the first cell as a serving cell in preset duration), so that the terminal device selects a new cell to camp on. A probability of a configuration abnormality of the new cell is relatively low, thereby further improving a success rate of a subsequent communication service.

In some implementations, the first wireless network is a 5G network, and correspondingly, the first cell is a 5G cell.

In some implementations, that the terminal device receives the radio resource control RRC reconfiguration message sent by the first cell includes: the terminal device receives the RRC reconfiguration message sent by the first cell after receiving a Paging message sent by the first cell, where the Paging message is used to page the terminal device when there is an incoming call.

In some implementations, the second parameter item is a parameter item in a configuration list of a first type in the first configuration information, and the configuration list of the first type may be a list corresponding to a resourceToAddModList field.

According to a second aspect, a terminal device is provided. The terminal device includes:
a memory, configured to store instructions; and
a processor, configured to invoke and execute the instructions in the memory, to enable the terminal device to perform the method according to any one of the seventh aspect.

According to a third aspect, a chip system is provided. The chip system includes a processing circuit, a receive pin, and a transmit pin, where the receive pin, the transmit pin, and the processing circuit communicate with each other by using an internal connection path, and the processing circuit performs the method according to any one of the seventh aspect to control the receive pin to receive a signal and control the transmit pin to send a signal.

According to a fourth aspect, a chip system is provided. The chip system includes a processor, configured to support a terminal device in implementing the wireless communication method according to any one of the seventh aspect.

In some implementations, the chip system may be a modem chip.

### BRIEF DESCRIPTION OF DRAWINGS

FIG. 1 is a schematic diagram of an example of broadband resources corresponding to different BWPs according to an embodiment of this application;
FIG. 2 is a schematic diagram of an example of related cell parameters in a configuration of a BWP according to an embodiment of this application;
FIG. 3 is a schematic diagram of an example of an Initial DL/UL BWP parameter according to an embodiment of this application;
FIG. 4 is a schematic diagram of an example of a configuration parameter of ServingCellConfig according to an embodiment of this application;
FIG. 5 is a schematic diagram of an example of a correspondence between LocationAndBandwidth and each of an initial virtual resource block and a length of continuously allocated resource blocks according to an embodiment of this application;
FIG. 6 is a signaling interaction flowchart for a call service in a related technology;
FIG. 7 is a schematic diagram of an example in which a configuration parameter of a BWP is abnormal according to an embodiment of this application;
FIG. 8 is a schematic diagram of an example of a configuration parameter of a BWP according to an embodiment of this application;
FIG. 9 is a signaling interaction flowchart of an example of a communication method in a wireless network according to an embodiment of this application;
FIG. 10 is a signaling interaction flowchart of another example of a communication method in a wireless network according to an embodiment of this application;
FIG. 11 is a signaling interaction flowchart of still another example of a communication method in a wireless network according to an embodiment of this application;
FIG. 12 is a signaling interaction flowchart of still another example of a communication method in a wireless network according to an embodiment of this application;
FIG. 13A and FIG. 13B are a signaling interaction flowchart of still another example of a communication method in a wireless network according to an embodiment of this application;
FIG. 14 is a signaling interaction flowchart of still another example of a communication method in a wireless network according to an embodiment of this application;
FIG. 15 is a schematic diagram of a structure of an example of a terminal device according to an embodiment of this application; and
FIG. 16 is a block diagram of a software structure of an example of a terminal device according to an embodiment of this application.

### DESCRIPTION OF EMBODIMENTS

The following describes technical solutions in embodiments of this application with reference to the accompanying drawings in the embodiments of this application. In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of the embodiments of this application, "a plurality of" means two or more.

The following terms "first", "second", and "third" are merely used for description, and cannot be understood as an indication or implication of relative importance or an implicit indication of a quantity of indicated technical features. Therefore, a feature defined with "first", "second", or "third" may explicitly or implicitly include one or more such features.

Currently, a 5G network gradually becomes commercially available. A terminal device may implement communication services such as surfing the Internet and making calls in the 5G network. In this case, the terminal device (for example, a mobile phone, also referred to as UE in the embodiments of this application) needs to first access the 5G network to establish a 5G session.

After a user enables a function of the 5G network on the UE, the UE may be automatically connected to the 5G network and establish a communication connection. This process may include:
1. Cell search and selection: The UE may scan surrounding 5G bands to obtain available cell information, and select an optimal cell for access based on a preset cell selection algorithm.
2. Cell access: The UE sends an access request to the optimal cell. After receiving the request, the cell may determine access authorization. If the UE meets an access condition, the cell allocates a temporary mobile subscriber identity (temporary mobile subscriber identity, TMSI) to the UE. After receiving access authorization from the cell, the UE may confirm the access request, and send a confirmation message to the cell. When the cell receives the confirmation message, an access process is completed, and an international mobile subscriber identity (international mobile subscriber identity, IMSI) is allocated to the UE.
3. Security negotiation and establishment: After the UE accesses the cell, the UE may send a security negotiation request to a core network, to ensure security of a subsequent communication service. After receiving the security negotiation request, the core network may select a suitable security protocol based on identity information of the UE and a network policy, and send a negotiation response to the UE. After receiving the negotiation response, the UE sends a negotiation confirmation message to the core network if the UE confirms the negotiation request. After the core network receives the negotiation confirmation message, a security negotiation and establishment process is completed, and a related key is generated for the UE.
4. Service request and establishment: Then, if the UE needs to perform a communication service, the UE may send a service request to the core network, to inform the core network of the communication service that needs to be performed. After receiving the service request, the core network may select a suitable service policy based on a requirement of the UE and a network resource status, and send a service response to the UE. After receiving the service response, the UE may send a service confirmation message to the core network if the UE confirms the service request. After the core network receives the service confirmation message, a service request and establishment process is completed, and a corresponding service resource may be allocated to the UE.

However, during related research and development of a connection in the 5G network, researchers found that a bandwidth of a 5G network has a great increase compared with that of 4G. However, some communication services (for example, an internet of things service) performed by the UE do not need a wide bandwidth. If all services or all terminal devices (including devices other than the mobile phone) forcibly support a wide bandwidth, a waste of resources is caused. Therefore, in the 5G network, a concept of a bandwidth part (bandwidth part, BWP) is proposed. A BWP is a set of consecutive common resource blocks (common resource blocks, CRB) at a subcarrier spacing in a bandwidth part of a carrier (for example, a cell at 100 MHZ). A BWP is a segment of consecutive bandwidth resources allocated by a network side (the core network) to the UE, and may implement flexible data transmission between the network side and the UE. Each BWP corresponds to a specific Numerology (a system parameter), and is an essential configuration for accessing the 5G network by the UE. Different UEs may be configured with different BWPs, and different communication services of one UE may be configured with different BWPs.

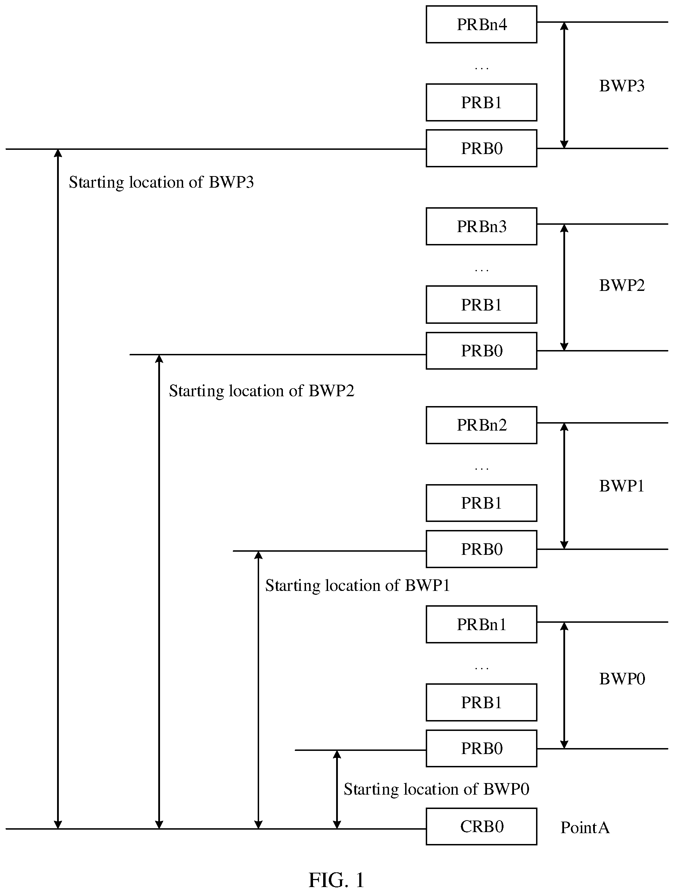

For example, for broadband resources corresponding to different BWPs, reference may be made to FIG. 1. A location of an RB at a lowest end in a full bandwidth on the network side may be denoted as PointA (CRB0); a starting location of a first BWP0 is ${N}_{BWP , 0}^{start , u}$, and a quantity of RBs (namely, a bandwidth size of the BWP0) is ${N}_{BWP , 0}^{size , u}$; a starting location of a second BWP1 is ${N}_{BWP , 1}^{start , u}$, and a quantity of RBs (namely, a bandwidth size of the BWP1) is ${N}_{BWP , 1}^{size , u}$; a starting location of a third BWP2 is ${N}_{BWP , 2}^{start , u}$, and a quantity of RBs (namely, a bandwidth size of the BWP2) is ${N}_{BWP , 2}^{size , u}$; a starting location of a fourth BWP3 is ${N}_{BWP , 3}^{start , u}$, and a quantity of RBs (namely, a bandwidth size of the BWP3) is ${N}_{BWP , 3}^{size , u}$; and so on.

Usually, the BWPs may be classified into initial BWPs (initial BWP), dedicated BWPs (dedicated BWP), active BWPs (active BWP), and default BWPs (default BWP). The initial BWP is a BWP used by the UE in an initial access phase. The initial BWPs are classified into downlink initial BWPs and uplink initial BWPs. The dedicated BWP is a BWP configured by the UE in a radio resource control (radio resource control, RRC) connected state. The active BWP is a BWP activated by the UE at a moment in the RRC connected state, and is one of the dedicated BWPs. It is specified in the protocol that in the RRC connected state, the UE can activate only one configured dedicated BWP at a moment as an active BWP at the current moment. The default BWP is a BWP on which the UE operates after a BWP inactivity timer (inactivity timer) expires when the UE is in the RRC connected state, and is also one of the dedicated BWPs. A specific configured dedicated BWP used by the UE as a default BWP is indicated by using RRC signaling.

It may be learned from this description that when the UE accesses a cell, the network side may configure BWPs to the UE by using RRC signaling. Then, uplink and downlink bandwidths used by the UE are variable by configuring different BWPs to the UE on the network side. In addition to inconsistent bandwidth sizes of different BWPs, configuration parameters of other physical layer channels or signals are also independently configured by using each BWP. Therefore, the network side may switch a BWP of the UE to a wide bandwidth based on a current service quantity, for example, when a large amount of data needs to be transmitted. In addition, the network side also switch the UE to a BWP with better channel quality based on a measurement value of each frequency-domain channel.

For example, at a moment, the UE is playing an 8K high-definition video. In this case, a 5G wide bandwidth needs to be supported. Therefore, the network side may configure the UE to access a large BWP. After watching the video, a user starts to use the UE to send a message. In this case, the network side can simply allocate a small BWP to the UE, and the UE may communicate with the network side at a relatively low transmission power, to save resources.

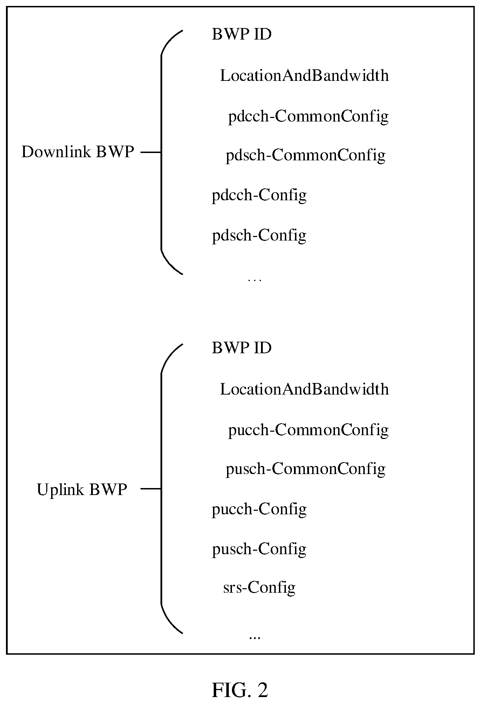

In some implementations, for related cell parameters in a configuration of a BWP, reference may be made to FIG. 2. A downlink BWP (downlink BWP) may include a BWP identifier (BWP ID), a frequency domain location and bandwidth (LocationAndBandwidth) of a bandwidth part, a cell-specific parameter (pdcch-CommonConfig) of a physical downlink control channel (physical downlink control channel, PDCCH), a cell-specific parameter (pdsch-CommonConfig) of a physical downlink shared channel (physical downlink shared channel, PDSCH), a UE-specific PDCCH configuration (pdcch-Config), a UE-specific PDSCH configuration (pdsch-Config), and the like. An uplink BWP (uplink BWP) may include a BWP identifier (bwp id), a frequency domain location and bandwidth (LocationAndBandwidth) of a bandwidth part, a cell-specific parameter (pucch-CommonConfig) of a physical uplink control channel (physical uplink control channel, PUCCH), a cell-specific parameter (pusch-CommonConfig) of a physical uplink shared channel (physical uplink shared channel, PUSCH), a UE-specific PUCCH configuration (pucch-Config), a UE-specific PUSCH configuration (pusch-Config), a configuration file type (srs-Config), and the like. For example, a BWP configuration process may include:

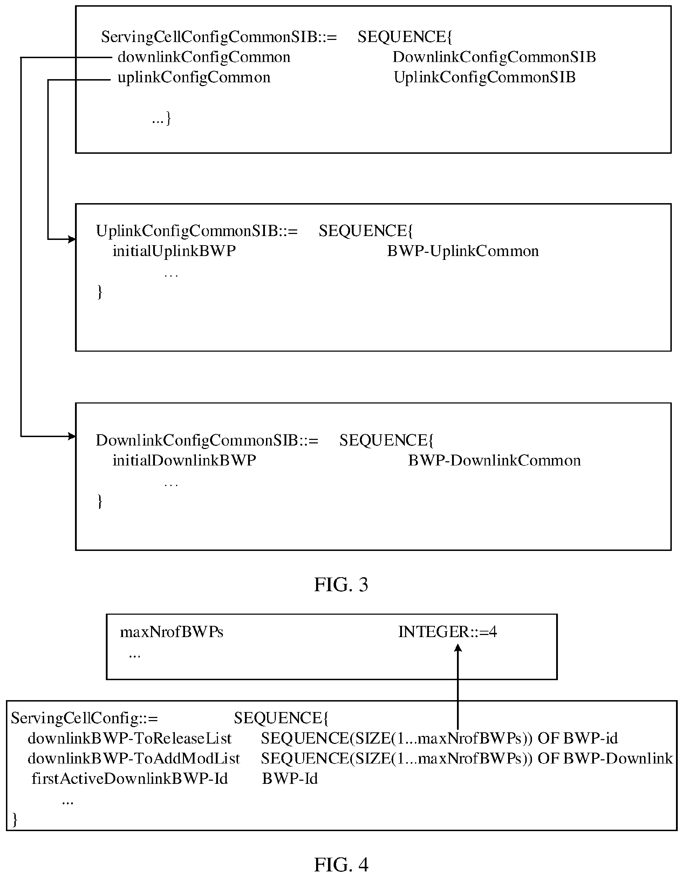

Firstly, the network side configures an initial downlink/uplink BWP (Initial DL/UL BWP) in a system information block 1 (system information block 1, SIB1), where BWP ID=0. It may be understood that a SIB1 message of the 5G network may carry basic information required for accessing a radio cell by the UE, a random access parameter, and availability and a scheduling period of other SIBs. For example, for a description of the Initial DL/UL BWP in a standard protocol 38.331, reference may be made to FIG. 3. ServingCellConfigCommonSIB is used to configure a cell-specific parameter for a serving cell of the UE in the SIB1, and a downlink parameter (DownlinkConfigCommonSIB) and an uplink parameter (UplinkConfigCommonSIB) are defined in the ServingCellConfigCommonSIB. The UplinkConfigCommonSIB defines an initial uplink BWP: initialUplinkBWP (used to provide an initial uplink BWP parameter of a cell), and the DownlinkConfigCommonSIB defines an initial downlink BWP: initialDownlinkBWP (used to provide an initial downlink BWP parameter of the cell).

A process in which the UE obtains the Initial DL/UL BWP in the initial access procedure includes: 1. Decode a master information block (master information block, MIB), to obtain Coreset#0 information. 2. Monitor SIB1 information in the Coreset#0. 3. Decode the SIB1, to obtain the Initial DL/UL BWP.

Secondly, before entering the connected state, the UE can perform receiving and sending only on the Initial BWP (initial BWP). Before receiving MSG4, for a downlink, the UE may also operate only on the Coreset#0, and the network side performs scheduling only on the Coreset#0. After the UE enters the connected state, a maximum of four additional BWPs may be configured in a configuration of the connected state, for example, in a serving cell configuration (ServingCellConfig) of a downlink configuration. Therefore, a configuration of a maximum of five BWPs needs to be stored on the UE side. However, at a same moment, the UE has a maximum of one active BWP. After entering the connected state, a first active BWP is determined by using a first active downlink BWP identifier (firstActiveDownlinkBWP-Id).

For example, for configuration parameters of the ServingCellConfig, reference may be made to FIG. 4. Among the configuration parameters, maxNorfBWPs represents a maximum quantity (for example, 4) of configured BWPs, and the firstActiveDownlinkBWP-Id is a first active BWP. The firstActiveDownlinkBWP-Id is interpreted in the protocol as follows: The BWP-Id included in this field is a BWP to be activated when an RRC reconfiguration is performed (if this field is not defined, BWP switching is not forcibly performed in the RRC reconfiguration).

In actual application, the network side may further perform BWP switching on the UE based on different communication services or other requirements. A switching process may include the following manners.
1. The network side indicates, by using downlink control information (downlink control information, DCI), the UE to perform BWP switching.

DCI format 0-1/1-1 has a BWP indicator field (Bandwidth part indicator field). If a BWP indicated by the field (field, or referred to as a field) is inconsistent with a current BWP, the UE needs to perform BWP switching. Because the field is a maximum of 2 bits, and based on the foregoing description, the UE is configured with a maximum of five BWPs. Apparently, 2 bits cannot represent the five BWPs. Therefore, two cases are distinguished.

### (1.1) Initial BWP+three BWPs

The description of DCI format 0-1 in the standard 38.212 is used as an example. In this case, a Bandwidth part indicator indicates a location index when BWP-Ids are arranged in an ascending order.

### (1.2) Initial BWP+four BWPs

In this case, the UE cannot be switched to the Initial BWP by using DCI, and can only be switched among other four configured BWPs.

2. Switch to the Initial BWP if there is no random access resource on a currently activated non-initial BWP.

If random access needs to be sent on a currently activated BWP because, for example, a timing advance (timing advance, TA) Timer expires, but there is no PRACH configuration on the current BWP configuration, the BWP needs to be switched to the Initial UL BWP for random access. It may be considered that the PRACH configuration definitely exists on the Initial UL BWP.

3. Switch to a default BWP when a BWP inactivity timer (inactivity timer) expires.

When the BWP inactivity timer expires, if a default downlink BWP identifier (defaultDownlinkBWP-Id) is configured, the UE is switched to the BWP. If the defaultDownlinkBWP-Id is not configured, the UE is switched to an initial downlink BWP (initialDownlinkBWP).

### 4. RRC reconfiguration for BWP switching

That is, firstDownlinkActiveBWP-Id or firstUplinkActiveBWP-Id is directly changed.

However, for both a BWP configuration and BWP switching, the UE needs to learn of a specifically allocated part of bandwidth resource on an overall bandwidth. It may be learned from FIG. 2 that, among related cell parameters in a configuration of a BWP, one parameter is a frequency domain location and bandwidth (LocationAndBandwidth) of a bandwidth part, and the UE may obtain, based on the parameter, two parameters: an initial virtual resource block (Offset) and a length (namely, a bandwidth size) of continuously allocated resource blocks.

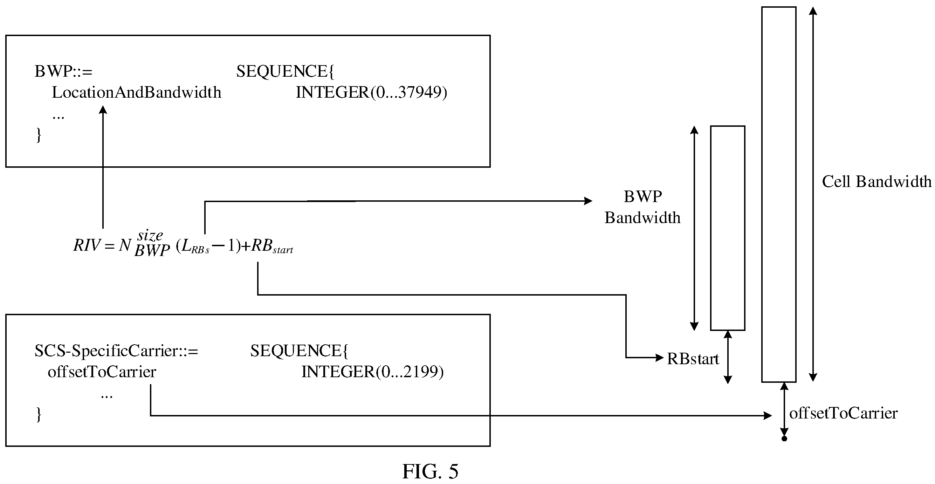

According to a calculation manner specified in the protocol, a resource allocation manner for the BWP is usually an RIV (resource indication value) manner, and RIV (that is, LocationAndBandwidth) corresponds to the initial virtual resource block and the length of the continuously allocated resource blocks. For example, a correspondence between LocationAndBandwidth and each of an initial virtual resource block and a length of continuously allocated resource blocks is shown in FIG. 5. BWP parameters include a LocationAndBandwidth parameter in a range of (0, 37949). *L_{RBs}* and *RBₛₜₐᵣₜ* may be calculated according to a formula
$RIV = {N}_{BWP}^{size} \left({L}_{RBs}-1\right) + {RB}_{start}$, of a protocol 38.214, where the RIV is a value of LocationAndBandwidth, *L_{RBs}* represents the length (BWP Bandwidth) of the continuously allocated resource blocks in a cell Bandwidth, *RBₛₜₐᵣₜ* represents the initial virtual resource block, and ${N}_{BWP}^{size} = 275$ is further set in the protocol. If the initial virtual resource block has an offset relative to a start point, the offset offsetToCarrier of the initial virtual resource block may be further defined in a parameter SCS-SpecificCarrier.

In a normal case, when the network side configures a plurality of BWPs to the UE, if BWP parameters are normal, the UE may return a reconfiguration complete message to the network side, to complete a configuration process. Subsequently, the UE may perform a communication service on an active BWP. However, it is found that in some scenarios, due to a problem in a configuration of a parameter for a BWP of a PUCCH channel in an RRC reconfiguration message sent by the network side to the UE, verification performed by the UE on the RRC reconfiguration message fails, so that the UE does not send the RRC reconfiguration complete message (that is, the UE does not respond to the RRC reconfiguration message) to the network side. As a result, the UE cannot establish a data radio bearer (data radio bearer, DRB) and context initialization of the UE in a network fails, which ultimately leads to the problem that a calling party or a called party is unreachable in a call service scenario or a data service is unavailable in a data service scenario.

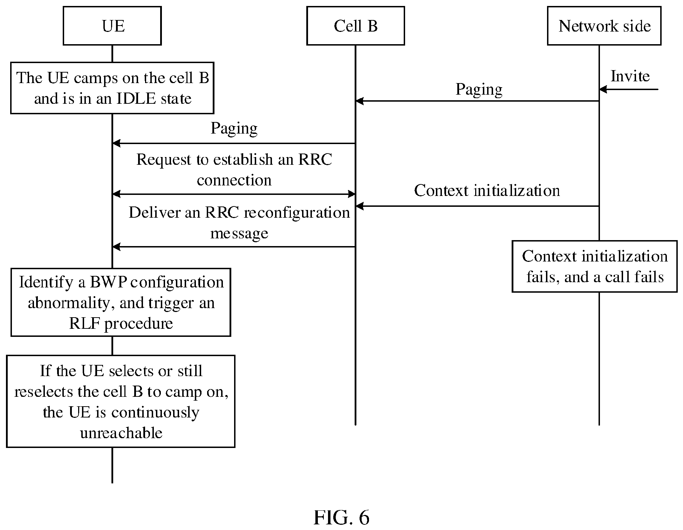

For example, FIG. 6 is a signaling interaction flowchart for a call service in a related technology. When UE camps on a cell B and is in an idle state (IDLE state), and the UE has a service request (for example, the UE receives a Paging message used to page the UE), the UE establishes an RRC connection with a network side (a core network). The core network delivers an RRC reconfiguration message by using the cell B. Parameters corresponding to some BWPs in the RRC reconfiguration message have a configuration abnormality (for example, a BWP1 is normal and a BWP2 is abnormal). The UE identifies the configuration abnormalities of the BWPs, and triggers a radio link failure (radio link failure, RLF) procedure. Because the core network does not receive the reconfiguration complete message returned by the UE, context initialization of the UE cannot be performed, that is, context initialization of the UE fails, and an invite (invite) message from a calling party cannot be delivered, resulting in the problem that a called party is unreachable. It is assumed that the UE subsequently reselects a cell. If the cell B has a highest priority or a best signal, the UE still selects the cell B to camp on. If BWP parameters in the RRC reconfiguration message delivered by the cell B still have a configuration abnormality, the UE is continuously unreachable.

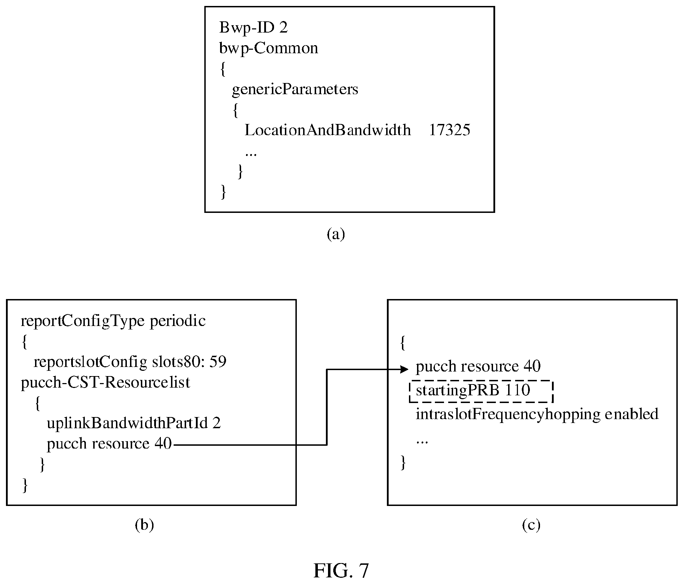

In view of this problem, configuration parameters of a BWP2 are analyzed. It is assumed that the RRC reconfiguration message delivered by the network side carries two BWPs: a BWP1 and a BWP2, and the BWP2 has a configuration abnormality. It is found that a value of LocationAndBandwidth is configured to be 17325 (as shown in (a) in FIG. 7). If it should be calculated that 17325=275×(64-1)+0 according to a formula $RIV = {N}_{BWP}^{size} \left({L}_{RBs}-1\right) + {RB}_{start}$, that is, *RBₛₜₐᵣₜ*=0,*L_{RBs}*=64, then a maximum length of continuously allocated resource blocks is 64. However, among the configuration parameters of the BWP2, a starting PRB corresponding to a resource block whose pucch resource Id is 40 is configured to be 110 (as shown in (b) and (c) in FIG. 7), which exceeds a range of *L_{RBs}*, and obviously, there is a configuration abnormality in (c) in FIG. 7. Therefore, verification performed by the UE on the RRC reconfiguration message fails, and consequently, the called party is unreachable or a data service is unavailable.

Therefore, reasons for an RRC reconfiguration failure in the above related technology are as follows: 1. According to the formula in the protocol, it is improper if the starting PRB configured on the network side exceeds a theoretically calculated range of *L_{RBs}*. There is a problem if the network side allows the UE to be switched to the BWP ID during subsequent data transmission.2. For this incorrect configuration item (namely, the startingPRB), there may be a problem in future use by the UE. Therefore, in this case, a modem in the UE determines that verification of the RRC reconfiguration message fails, and thus the UE does not return the reconfiguration complete message.

Based on this, some embodiments of this application provide a communication method in a wireless network, to improve a success rate of a terminal service in the wireless network.

In some embodiments, a parameter item with a configuration abnormality exists in a reconfiguration message (the reconfiguration message in the embodiments of this application is an RRC reconfiguration message) sent by a network side to UE. For example, the foregoing pucch resource Id 40 is a parameter item with a configuration abnormality. Specifically, a starting PRB configured for the parameter item pucch resource Id 40 in the reconfiguration message is abnormal because a configuration for one resource block (pucch resource Id 40) corresponding to one BWP on the network side exceeds a range specified for LocationAndBandwidth. However, from analysis on the RRC reconfiguration message sent by the network side to the UE, it may be found that a parameter list resourceSetToAddModList is defined in the RRC reconfiguration message, a plurality of resource lists resourceLists (which may also be referred to as preset lists) are defined in the parameter list, and each resourceList includes a plurality of resource Ids. Only a parameter item corresponding to a resource Id that exists in the resourceList is a parameter item actually to be used by the UE in a subsequent service. If a parameter item does not exist in the resourceList of the resourceSetToAddModList, even if the parameter item is configured at another location in the RRC reconfiguration message, the parameter item is not to be used by the UE in the subsequent service.

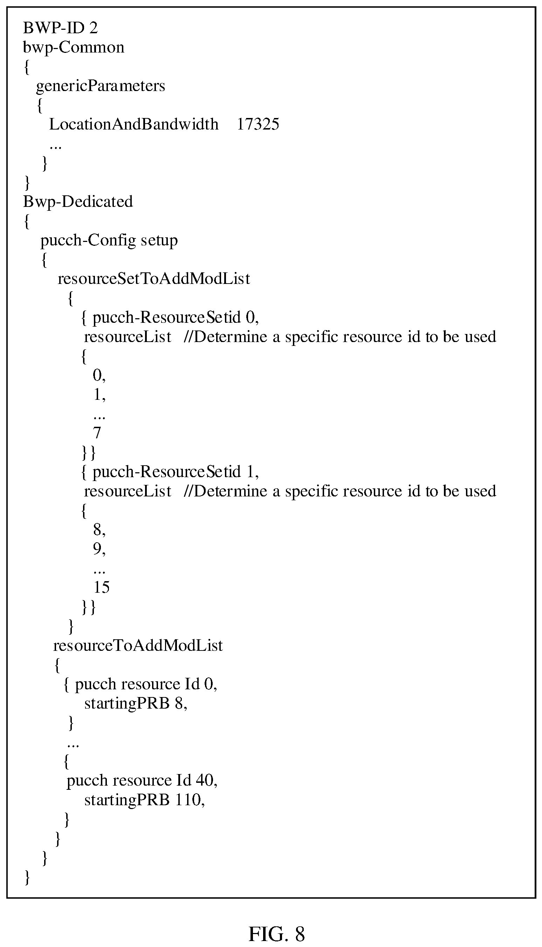

For example, a configuration for a BWP (for example, a BWP2) in the RRC reconfiguration message is shown in FIG. 8. Firstly, a broadband resource usage range LocationAndBandwidth is determined to be 17325, then a plurality of resourceLists are defined in the resourceSetToAddModList, and each resourceList includes a plurality of resource Ids (parameter items corresponding to these resource Ids are used in the subsequent service). For example, it is determined, based on a first resourceList, that parameter items whose resource Ids are 0 to 7 are used, and it is determined, based on a second resourceList, that parameter items whose resource Ids are 8 to 15 are used. Next, the RRC reconfiguration message further includes a configuration list resourceToAddModList, and the resourceToAddModList includes configuration information for each parameter item (a pucch resource Id corresponding to the parameter item herein has the same meaning as a resource Id in the resourceList). It may be understood that the pucch resource Id corresponding to the configuration parameter item in the resourceToAddModList may exist in the resourceList, or may not exist in the resourceList. Then, if a parameter item is configured in the resourceToAddModList, but does not exist in the resourceList, the parameter item is not used by the UE in the subsequent service, and thus a communication service of the UE is not affected even if the parameter item has a configuration abnormality.

For example, in FIG. 8, the parameter item pucch resource Id 40 with a configuration abnormality is configured in the resourceToAddModList, configuration parameters include a starting PRB 110 (it is determined in the foregoing method that the starting PRB 110 has a configuration abnormality). However, the resource Id 40 is not in the resourceList of the resourceSetToAddModList in the RRC reconfiguration message, which means that the pucch resource Id 40 is not subsequently used by the UE. Therefore, even if the UE accepts a configuration of the parameter item with a configuration abnormality in the RRC reconfiguration message, subsequent services of the UE are not affected. Therefore, for a parameter item that is configured in the RRC reconfiguration message and that does not exist in the resourceList of the resourceSetToAddModList, the UE may not need to verify whether a configuration corresponding to the parameter item is correct (that is, whether the configuration is abnormal), or the UE still normally returns the RRC reconfiguration complete message when verifying that the configuration corresponding to the parameter item is abnormal, to improve a success rate of a terminal service. For a specific process, reference may be made to description of the following embodiments.

### Embodiment 1

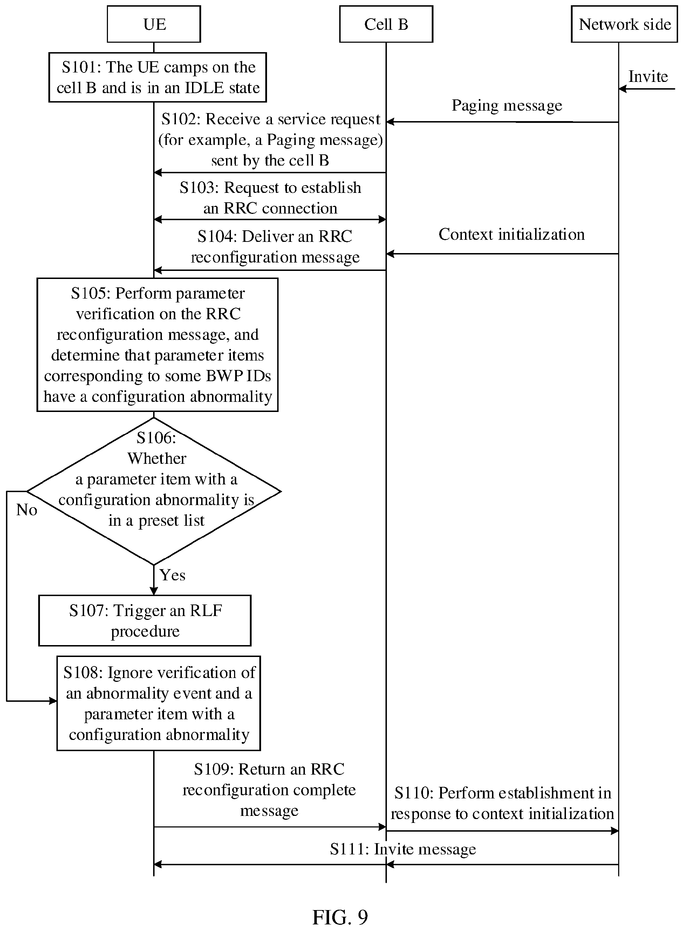

This embodiment describes a process in which UE still normally returns an RRC reconfiguration complete message when verifying that a configuration corresponding to a parameter item is abnormal, and the parameter item does not exist in an resourceList of the resourceSetToAddModList. Specifically, as shown in FIG. 9, a signaling interaction procedure of an example of a communication method in a wireless network according to an embodiment of this application may include the following steps.

S101: The UE camps on a cell B and is in an IDLE state.

The UE may camp on the cell B through cell search and access. It may be understood that the UE is in the IDLE state if the UE does not currently perform any communication service.

S102: The UE receives a service request sent by the cell B.

S103: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with the network side (for example, a cell B in an NR network) to initialize context on the network side.

S104: The cell B delivers an RRC reconfiguration message to the UE.

S105: The UE performs parameter verification (verification may also be referred to as identification or a check) on the RRC reconfiguration message, and determines that parameter items corresponding to some BWP IDs in the RRC reconfiguration message have a configuration abnormality.

A BWP with a parameter configuration abnormality may be a BWP that is configured by the cell B for the UE and that needs to be currently activated, or may be a BWP that does not need to be currently activated.

The parameter configuration abnormality verified herein may be the configuration abnormality of the parameter item startingPRB of the pucch resource Id 40 shown in FIG. 8.

In one implementation, the UE may verify the RRC reconfiguration message as follows: the UE checks configuration information in a configuration list resourceToAddModList to determine whether a parameter item corresponding to each pucch resource Id has a configuration abnormality. That is, the UE may determine all configuration information with abnormalities (all pucch resource Ids with a configuration abnormality) in the RRC reconfiguration message.

S106: The UE determines whether a parameter item pucch resource Id with a configuration abnormality is in a preset list, and performs S107 if the parameter item is in the preset list, or performs S108 if the parameter item is not in the preset list.

That is, the UE determines whether the determined parameter item pucch resource Id (for example, the pucch resource Id is equal to 40) with the configuration abnormality (that is, configuration information with an abnormality, for example, the configuration information corresponding to the startingPRB is abnormal) is in a resourceList (the preset list) of the resourceSetToAddModList.

S107: The UE does not return the RRC reconfiguration complete message to the cell B, and triggers an RLF procedure.

That is, if the parameter item pucch resource Id (for example, the pucch resource Id is equal to 40) with a configuration abnormality is in the preset list resourceList, the UE uses the parameter item in a subsequent service. Because a service failure most likely occurs if the parameter item has a configuration abnormality, the UE may consider that RRC reconfiguration fails. In this case, the UE may not return the RRC reconfiguration complete message to the cell B (the network side), and may trigger the RLF procedure.

In one implementation, the UE may determine whether all pucch resource Ids with a configuration abnormality are in the preset list. If at least one pucch resource Id with a configuration abnormality is in the preset list, the UE triggers the RLF procedure.

S108: The UE ignores verification of abnormality events and parameter items with a configuration abnormality.

S109: The UE returns the RRC reconfiguration complete message to the cell B.

S110: The network side performs establishment in response to context initialization.

S111: The network side sends an Invite message to the UE, and a call service is normally performed.

That is, if the parameter item pucch resource Id with the configuration abnormality is not in the resourceList, the UE does not use the parameter item in a subsequent service. Even if the parameter item has the configuration abnormality, services of the UE are not affected. Therefore, the UE may ignore the parameter item with the configuration abnormality. In this case, the UE may normally return the RRC reconfiguration complete message. Because the parameter item pucch resource Id with the configuration abnormality is not used in a subsequent service of the UE, the subsequent service (for example, a call service in this embodiment of this application) of the UE may be normally performed.

In one implementation, the UE may determine whether all pucch resource Ids with a configuration abnormality are in the preset list. If none of the pucch resource Ids with a configuration abnormality is in the preset list, the UE returns the RRC reconfiguration complete message to the cell B.

In the foregoing implementation, when the UE receives a BWP that is configured on the network side and that includes a configuration abnormality, during reconfiguration verification, the UE may determine whether the parameter item pucch resource Id with the configuration abnormality is in the preset list. If the parameter item pucch resource Id with the configuration abnormality is not in the preset list, the UE may normally return the RRC reconfiguration complete message, thereby ensuring that a current communication service is normally performed, and improving a success rate of the communication service.

### Embodiment 2

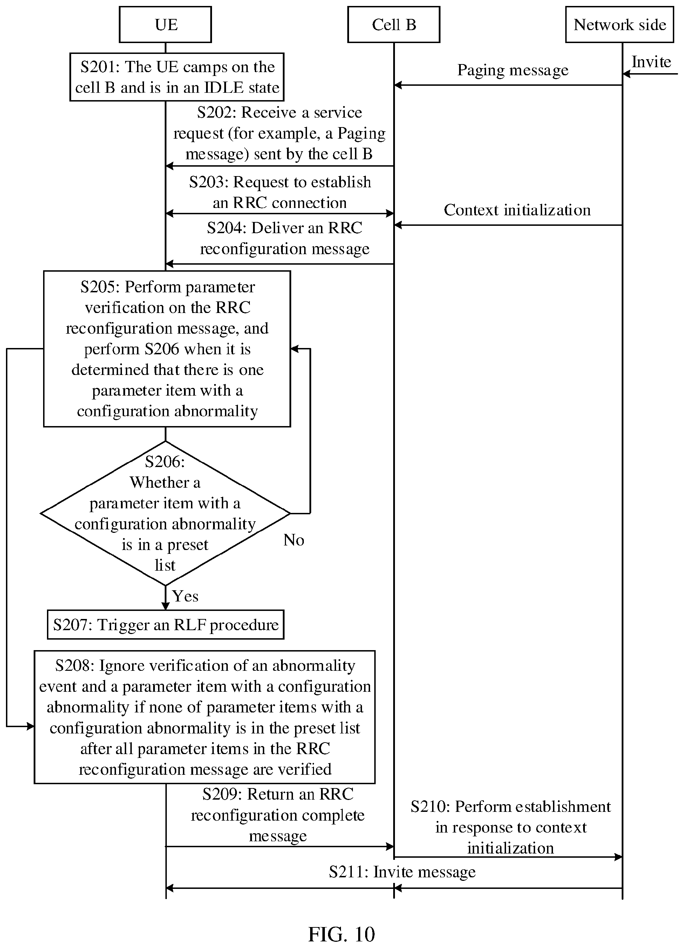

This embodiment describes a process in which UE still normally returns an RRC reconfiguration complete message when verifying that a configuration corresponding to a parameter item is abnormal, and the parameter item does not exist in an resourceList of the resourceSetToAddModList. Specifically, as shown in FIG. 10, a signaling interaction procedure of another example of a communication method in a wireless network according to an embodiment of this application may include the following steps.

S201: The UE camps on a cell B and is in an IDLE state.

The UE may camp on the cell B through cell search and access. It may be understood that the UE is in the IDLE state if the UE does not currently perform any communication service.

S202: The UE receives a service request sent by the cell B.

S203: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with the network side (for example, a cell B in an NR network) to initialize context on the network side.

S204: The cell B delivers an RRC reconfiguration message to the UE.

S205: The UE performs parameter verification (verification may also be referred to as identification or a check) on the RRC reconfiguration message, and performs S206 when it is determined that there is one parameter item with a configuration abnormality in the RRC reconfiguration message.

The configuration abnormality of the parameter item verified herein may be the configuration abnormality of the parameter item startingPRB of the pucch resource Id 40 shown in FIG. 8.

In this implementation, the UE may verify the RRC reconfiguration message as follows: the UE successively checks configuration information in a configuration list resourceToAddModList, and performs S206 when it is determined that a parameter item corresponding to a pucch resource Id has a configuration abnormality.

In some implementations, the configuration list resourceToAddModList may also be referred to as a configuration list of a first type, that is, the UE performs S206 when it is verified that there is one parameter item with a configuration abnormality in the configuration list of the first type.

In some implementations, there is another configuration list in the RRC reconfiguration message in addition to the configuration list resourceToAddModList. When the another configuration list is verified, the following process may not be performed if the another configuration list does not have a corresponding preset list, and the following process may be performed if the another configuration list also has a corresponding preset list.

S206: The UE determines whether a parameter item pucch resource Id with a configuration abnormality is in a preset list, and performs S207 if the parameter item is in the preset list, or continues to perform S205 if the parameter item is not in the preset list.

That is, the UE determines whether the determined parameter item pucch resource Id (for example, the pucch resource Id is equal to 40) with the configuration abnormality is in a resourceList (the preset list) of the resourceSetToAddModList.

It should be noted that unlike embodiment 1, it is determined whether the parameter item pucch resource Id is in the preset list when one parameter item is determined to have a configuration abnormality, and the UE continues to perform S205 if the parameter item is not in the preset list to check remaining unchecked parameter items in the resourceToAddModList. When it is determined that there is another parameter item with a configuration abnormality, S206 is performed, and the like.

S207: The UE does not return the RRC reconfiguration complete message to the cell B, and triggers an RLF procedure.

That is, if the parameter item pucch resource Id (for example, the pucch resource Id is equal to 40) with a configuration abnormality is in the preset list resourceList, the UE uses the parameter item in a subsequent service. Because a service failure most likely occurs if the parameter item has a configuration abnormality, the UE may consider that RRC reconfiguration fails. In this case, the UE may not return the RRC reconfiguration complete message to the cell B (the network side), and may trigger the RLF procedure. It may be understood that if the UE triggers the RLF procedure in this case, the UE does not need to check remaining unchecked parameter items in the RRC reconfiguration message.

S208: The UE ignores verification of abnormality events and parameter items with a configuration abnormality if none of parameter items pucch resource Ids with a configuration abnormality is in the preset list after the UE verifies all parameter items in the RRC reconfiguration message.

S209: The UE returns the RRC reconfiguration complete message to the cell B.

S210: The network side performs establishment in response to context initialization.

S211: The network side sends an Invite message to the UE, and a call service is normally performed.

That is, if a parameter item pucch resource Id with a configuration abnormality is not in the resourceList after the foregoing polling verification, the UE may ignore the parameter item with the configuration abnormality. In this case, the UE may normally return the RRC reconfiguration complete message. Because the parameter item pucch resource Id with the configuration abnormality is not used in a subsequent service of the UE, the subsequent service (for example, a call service in this embodiment of this application) of the UE may be normally performed.

In some implementations, after the UE verifies all parameter items in a configuration list of the first type, if none of parameter item pucch resource Ids with a configuration abnormality is in the preset list, the UE ignores verification of abnormality events and parameter items with a configuration abnormality.

In the foregoing implementation, when the UE receives a BWP that is configured on the network side and that includes a configuration abnormality, during reconfiguration verification, the UE may determine whether the parameter item pucch resource Id with the configuration abnormality is in the preset list. If the parameter item pucch resource Id with the configuration abnormality is not in the preset list, the UE may normally return the RRC reconfiguration complete message, thereby ensuring that a current communication service is normally performed, and improving a success rate of the communication service.

### Embodiment 3

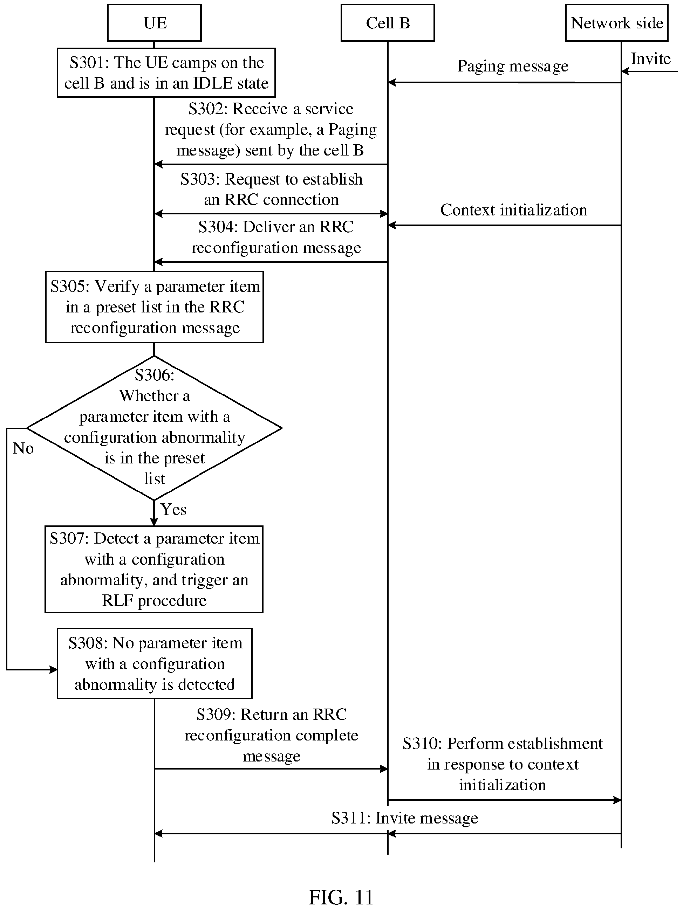

This embodiment describes a process in which the UE does not verify whether a configuration corresponding to a parameter item that does not exist in a resourceList of the resourceSetToAddModList is correct. Specifically, as shown in FIG. 11, a signaling interaction procedure of still another example of a communication method in a wireless network according to an embodiment of this application may include the following steps.

S301: The UE camps on a cell B and is in an IDLE state.

The UE may camp on the cell B through cell search and access. It may be understood that the UE is in the IDLE state if the UE does not currently perform any communication service.

S302: The UE receives a service request sent by the cell B.

S303: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with a network (for example, a cell B in an NR network) to initialize context on the network side.

S304: The cell B delivers an RRC reconfiguration message to the UE.

In the RRC reconfiguration message, parameters corresponding to some BWP IDs have configuration abnormalities (for example, the parameter item startingPRB of the pucch resource Id 40 has a configuration abnormality). A BWP with a parameter configuration abnormality may be a BWP that is configured by the cell B for the UE and that needs to be currently activated, or may be a BWP that does not need to be currently activated.

S305: The UE verifies parameter items in a preset list in the RRC reconfiguration message.

When the UE performs verification (verification may also be referred to as a check or identification, and verification of configuration information may be understood as verifying whether the configuration information is abnormal) on configuration information corresponding to pucch resource Ids in the RRC reconfiguration message, the UE may only verify pucch resource Ids that exist in the preset list (namely, the resourceList of the resourceSetToAddModList).

For example, it is assumed that resource Ids included in the resourceList of the preset list resourceSetToAddModList are 0, 1, 2...15, pucch resource Ids corresponding to configuration information in the configuration list resourceToAddModList are 0, 1, 2...15, and 40 respectively, and the pucch resource Id 40 does not exist in the resourceList, then the UE only checks the configuration information whose pucch resource Ids are 0, 1, 2...15 respectively, and no longer checks the configuration information whose pucch resource Id is 40 (that is, ignore check of the configuration information whose pucch resource Id is 40).

S306: The UE determines whether a parameter item with a configuration abnormality is in the preset list, performs S307 if the parameter item is in the preset list, or performs S308 if the parameter item is not in the preset list.

It may be understood that after verifying parameter items in the preset list, the UE may determine whether there is a parameter item with a configuration abnormality. For example, if only the configuration information whose pucch resource Id is 40 is abnormal, and the resource Id 40 does not exist in the resourceList, the UE does not detect any parameter item with a configuration abnormality, that is, there is no parameter item with a configuration abnormality in the preset list.

S307: The UE detects a parameter item with a configuration abnormality, does not return an RRC reconfiguration complete message to the cell B, and triggers an RLF procedure.

That is, if the parameter item pucch resource Id (for example, the pucch resource Id is equal to 40) with a configuration abnormality (that is, configuration information with an abnormality) exists in the resourceList, the configuration abnormality is detected by the UE. The UE may consider that RRC reconfiguration fails. In this case, the UE may not return the RRC reconfiguration complete message to the cell B (on the network side), and may trigger the RLF procedure.

S308: The UE does not detect a parameter item with a configuration abnormality.

S309: The UE returns the RRC reconfiguration complete message to the cell B.

S310: The network side performs establishment in response to context initialization.

S311: The network side sends an Invite message to the UE, and a call service is normally performed.

That is, if the parameter item pucch resource Id (for example, the pucch resource Id is equal to 40) with a configuration abnormality (that is, configuration information with an abnormality) is not in the resourceList, the UE does not check configuration information related to the parameter item pucch resource Id (for example, the pucch resource Id is equal to 40). Then, after checking the RRC reconfiguration message, the UE does not consider that the reconfiguration message has a configuration abnormality. In this case, the UE may normally return the RRC reconfiguration complete message. Because the parameter item pucch resource Id (for example, the pucch resource Id is equal to 40) with the configuration abnormality is not used in a subsequent service of the UE, the subsequent service (for example, a call service in this embodiment of this application) of the UE may be normally performed.

In some implementations, when the UE verifies the parameter items in the preset list in S305, the UE may successively verify the parameter items. When a parameter item with a configuration abnormality is verified, S307 is performed to trigger the RLF procedure. If the currently verified parameter item is normal, the next parameter item is then verified, and the like. If all the parameter items in the preset list are checked, and there is no parameter item with a configuration abnormality, S308 is performed.

In the foregoing implementation, when the UE receives a BWP that is configured on the network side and that includes a configuration abnormality, during reconfiguration verification, for a parameter item that does not exist in the resourceList of the resourceSetToAddModList, the UE does not verify whether a configuration corresponding to the parameter item is correct. Therefore, the UE may normally return the RRC reconfiguration complete message when parameter items in the resourceList do not have configuration abnormalities, thereby ensuring that a current communication service is normally performed, and improving a success rate of the communication service.

### Embodiment 4

In the related technology, there is the main problem that UE is unreachable when a calling party makes a call. Therefore, in this embodiment, different processing strategies may be further performed based on whether a call is currently being established during reconfiguration verification to ensure a success rate of a call service.

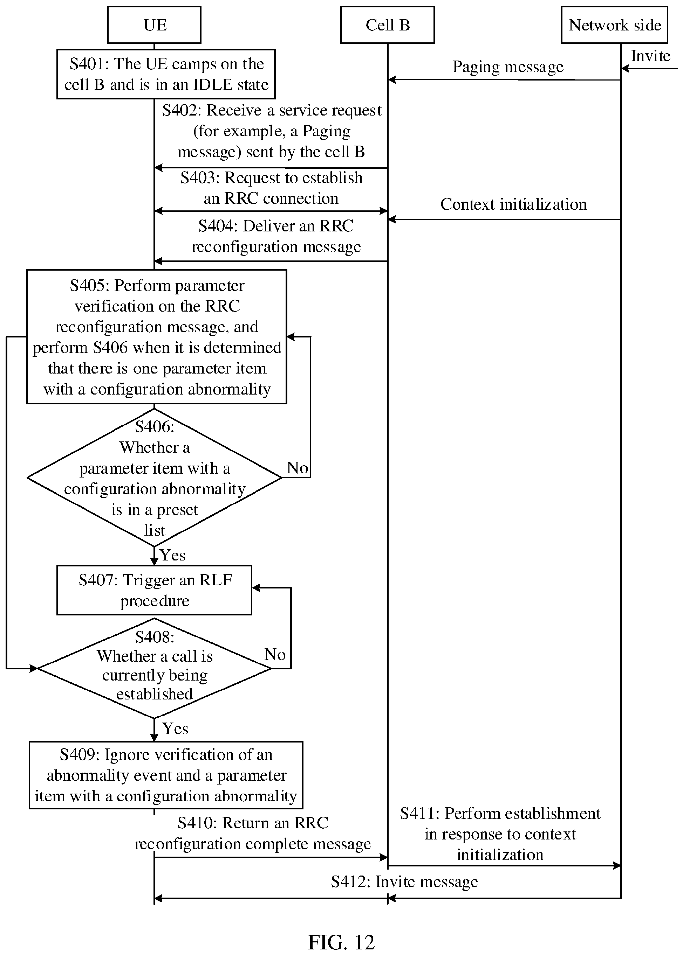

Specifically, as shown in FIG. 12, a signaling interaction procedure of still another example of a communication method in a wireless network according to an embodiment of this application may include the following steps.

S401: The UE camps on the cell B and is in an IDLE state.

The UE may camp on the cell B through cell search and access. It may be understood that the UE is in the IDLE state if the UE does not currently perform any communication service.

S402: The UE receives a service request sent by the cell B.

S403: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with the network side (for example, a cell B in an NR network) to initialize context on the network side.

S404: The cell B delivers an RRC reconfiguration message to the UE.

S405: The UE performs parameter verification (verification may also be referred to as identification or a check) on the RRC reconfiguration message, and performs S406 when it is determined that there is one parameter item with a configuration abnormality in the RRC reconfiguration message.

A BWP with a parameter configuration abnormality may be a BWP that is configured by the cell B for the UE and that needs to be currently activated, or may be a BWP that does not need to be currently activated.

The parameter configuration abnormality verified herein may be the configuration abnormality of the parameter item startingPRB of the pucch resource Id 40 shown in FIG. 8.

S406: The UE determines whether a parameter item pucch resource Id with a configuration abnormality is in a preset list, and performs S407 if the parameter item is in the preset list, or performs S405 if the parameter item is not in the preset list.

That is, the UE determines whether the determined parameter item pucch resource Id (for example, the pucch resource Id is equal to 40) with the configuration abnormality (that is, configuration information with an abnormality, for example, the configuration information corresponding to the startingPRB is abnormal) is in a resourceList (the preset list) of the resourceSetToAddModList.

In one implementation, the UE may determine whether the parameter item pucch resource Id with the configuration abnormality is in the preset list after determining all configuration information (all pucch resource Ids with a configuration abnormality) with abnormalities in the RRC reconfiguration message. In another implementation, the UE may further determine whether the parameter item pucch resource Id is in the preset list when one parameter item with a configuration abnormality is determined. If the parameter item pucch resource Id is not in the preset list, the UE continues to perform S405 to check remaining unchecked parameter items, and performs S408 until all parameter items are verified and none of parameter items with a configuration abnormality is in the preset list. This embodiment is illustrated by using the second implementation as an example.

S407: The UE does not return an RRC reconfiguration complete message to the cell B, and triggers an RLF procedure.

That is, if the parameter item pucch resource Id (for example, the pucch resource Id is equal to 40) with a configuration abnormality is in the preset list resourceList, the UE uses the parameter item in a subsequent service. Because a service failure most likely occurs if the parameter item has a configuration abnormality, the UE may consider that RRC reconfiguration fails. In this case, the UE may not return the RRC reconfiguration complete message to the cell B (the network side), and may trigger the RLF procedure.

S408: Determine whether a call is currently being established, perform S409 if the call is being established, or perform S407 if the call is not being established.

S409: The UE ignores verification of abnormality events and parameter items with a configuration abnormality.

S410: The UE returns the RRC reconfiguration complete message to the cell B.

That is, if the parameter item pucch resource Id with the configuration abnormality is not in the resourceList, the UE does not use the parameter item in a subsequent service. In this case, the UE may further determine whether a call is currently being established. If the call is being established, the UE may ignore the configuration abnormality and normally return the RRC reconfiguration complete message. If the call is not being established, the UE may consider that RRC reconfiguration fails, trigger the RLF procedure, and no longer perform subsequent steps. In some implementations, the UE may determine, based on the received service request, whether the service request is a call service request, and if the service request is a call service request, it is determined that a call is being established.

In some implementations, when it is determined in S406 that the parameter item with the configuration abnormality is not in the preset list, S408 may further be directly performed to determine whether a call is currently being established, and if the call is not being established, S407 is directly performed to trigger the RLF process. If the call is being established, the UE continues to perform S405 to check remaining unchecked parameter items, and performs S409 until all parameter items are verified and none of parameter items with a configuration abnormality is in the preset list.

S411: The network side performs establishment in response to context initialization.

S412: The network side sends an Invite message to the UE, and a call service is normally performed.

In the foregoing implementation, when the UE receives a BWP that is configured on the network side and that includes a configuration abnormality, during reconfiguration verification, the UE may determine whether the parameter item pucch resource Id with the configuration abnormality is in the preset list. If the parameter item pucch resource Id with the configuration abnormality is not in the preset list, and a call is currently being established, the UE may normally return the RRC reconfiguration complete message, thereby ensuring that a current call service is normally performed, and improving a success rate of the call service.

### Embodiment 5

In an actual scenario, if an RRC reconfiguration message delivered by a cell B on which UE camps has an on-going abnormality, it indicates that there may be a fault or a problem in the cell B. In this case, the UE may reselect a cell to reduce configuration abnormalities, so as to further improve a success rate of a communication service on the UE.

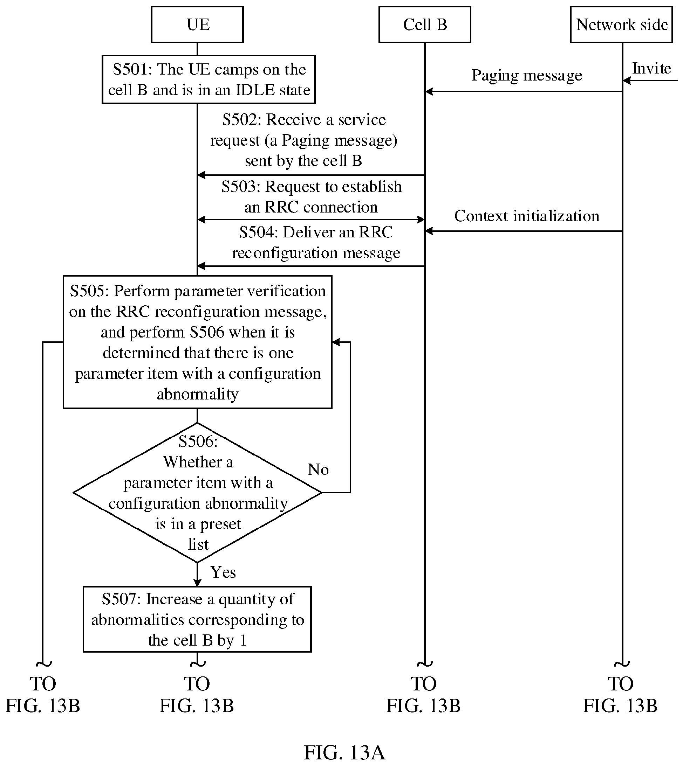

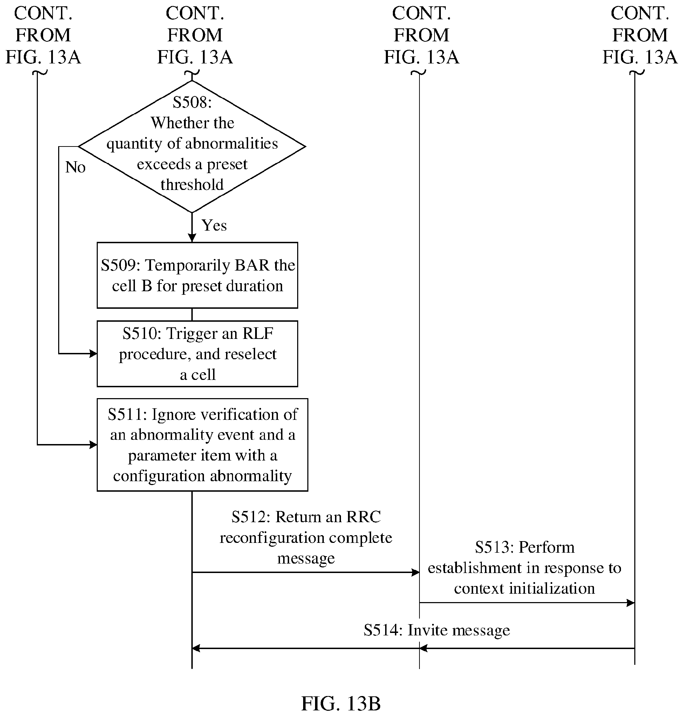

Specifically, as shown in FIG. 13, a signaling interaction procedure of still another example of a communication method in a wireless network according to an embodiment of this application may include the following steps.

S501: The UE camps on the cell B and is in an IDLE state.

S502: The UE receives a service request sent by the cell B.

S503: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with the network side (for example, a cell B in an NR network) to initialize context on the network side.

S504: The cell B delivers an RRC reconfiguration message to the UE.

S505: The UE performs parameter verification (verification may also be referred to as identification or a check) on the RRC reconfiguration message, and performs S506 when it is determined that there is one parameter item with a configuration abnormality in the RRC reconfiguration message.

A BWP with a parameter configuration abnormality may be a BWP that is configured by the cell B for the UE and that needs to be currently activated, or may be a BWP that does not need to be currently activated.

The parameter configuration abnormality verified herein may be the configuration abnormality of the parameter item startingPRB of the pucch resource Id 40 shown in FIG. 8.

S506: The UE determines whether a parameter item pucch resource Id with a configuration abnormality is in a preset list, and performs S507 if the parameter item is in the preset list, or performs S505 if the parameter item is not in the preset list.

That is, the UE determines whether the determined parameter item pucch resource Id (for example, the pucch resource Id is equal to 40) with the configuration abnormality (that is, configuration information with an abnormality, for example, the configuration information corresponding to the startingPRB is abnormal) is in a resourceList (the preset list) of the resourceSetToAddModList.

In one implementation, the UE may determine whether the parameter item pucch resource Id with the configuration abnormality is in the preset list after determining all configuration information (all pucch resource Ids with a configuration abnormality) with abnormalities in the RRC reconfiguration message. In another implementation, the UE may further determine whether the parameter item pucch resource Id is in the preset list when one parameter item with a configuration abnormality is determined. If the parameter item pucch resource Id is not in the preset list, the UE continues to perform S505 to check remaining unchecked parameter items, and performs S511 until all parameter items are verified and none of parameter items with a configuration abnormality is in the preset list. This embodiment is illustrated by using the second implementation as an example.

S507: Increase a quantity of abnormalities corresponding to the cell B by 1.

That is, if the parameter item pucch resource Id with the configuration abnormality is in the preset list, the UE increases the quantity of abnormalities corresponding to the cell B by 1.

S508: Determine whether the quantity of abnormalities corresponding to the cell B within preset time exceeds a preset threshold, and perform S509 if the quantity of abnormalities exceeds the preset threshold, or perform S510 if the quantity of abnormalities does not exceed the preset threshold.

The preset time may be set unit time, for example, 1 minute, and the preset threshold may be a set maximum quantity, for example, 3.

S509: The UE temporarily BARs the cell B for preset duration, and performs S510.

If the quantity of abnormalities corresponding to the cell B within the preset time exceeds the preset threshold, it indicates that a configuration problem of the cell B is not fixed, which still results in a service failure if the UE continues to camp on the cell B. Therefore, the UE may BAR the cell (namely, the cell B with the configuration problem) for a period of time (the preset duration), so that the UE subsequently selects another cell to camp on. In some implementations, the preset duration may be 5 minutes. That the UE BARs the cell may be barring the UE from accessing the cell during cell selection, cell reselection, and/or a cell handover.

S510: The UE triggers an RLF procedure, and reselects a cell.

If the quantity of abnormalities corresponding to the cell B within the preset time does not exceed the preset threshold, the UE does not need to temporarily BAR a cell with a configuration abnormality. In this case, the UE may trigger the RLF procedure for a reason of an RRC reconfiguration failure, and reselect a cell. In addition, after the UE temporarily BARs the cell B, the UE may also trigger the RLF procedure, and reselect a cell.

It may be understood that when the quantity of abnormalities corresponding to the cell B does not exceed the preset threshold, the UE may still select the cell B when reselecting a cell because the UE does not BAR the cell B, and until the quantity of abnormalities corresponding to the cell B exceeds the preset threshold, the UE BARs the cell B, and reselects a new cell when the UE reselects a cell. After successful access to the new cell, there is most likely no configuration abnormality problem on the new cell, so that subsequent services are normally performed.

S511: The UE ignores verification of abnormality events and parameter items with a configuration abnormality.

S512: The UE returns an RRC reconfiguration complete message to the cell B.

S513: The network side performs establishment in response to context initialization.

S514: The network side sends an Invite message to the UE, and a call service is normally performed.

That is, if the parameter item pucch resource Id with the configuration abnormality is not in the resourceList, the UE does not use the parameter item in a subsequent service. Even if the parameter item has the configuration abnormality, services of the UE are not affected. Therefore, the UE may ignore the configuration abnormality. In this case, the UE may normally return the RRC reconfiguration complete message. Because the parameter item pucch resource Id with the configuration abnormality is not used in a subsequent service of the UE, the subsequent service (for example, a call service in this embodiment of this application) of the UE may be normally performed.

In the foregoing implementation, when the UE receives a BWP that is configured on the network side and that includes a configuration abnormality, during reconfiguration verification, the UE may determine whether the parameter item pucch resource Id with the configuration abnormality is in the preset list. If the parameter item pucch resource Id with the configuration abnormality is not in the preset list, the UE may normally return the RRC reconfiguration complete message, thereby ensuring that a current communication service is normally performed, and improving a success rate of the communication service. In addition, if the parameter item pucch resource Id with the configuration abnormality is in the preset list, the UE may count a quantity of abnormalities of a cell. If the quantity of configuration abnormalities delivered by the cell within the preset time exceeds the preset threshold, the UE may BAR the cell for a period of time, so that the UE selects a new cell to camp on. The probability of a configuration abnormality of the new cell is relatively low, thereby further improving a success rate of a subsequent communication service.

### Embodiment 6

For the foregoing several embodiments, a BWP with a parameter configuration abnormality may be a BWP that is configured by the cell B for the UE and that needs to be currently activated, or may be a BWP that does not need to be currently activated. However, because the cell B may configure a plurality of BWPs for the UE, only one BWP is activated at a moment, and the active BWP is used for subsequent service communication, other inactive BWPs are not used. Therefore, it is considered in this embodiment that when a BWP with a parameter configuration abnormality is a BWP that does not need to be currently activated, and the UE actually uses a BWP with a normal configuration, the UE may normally return an RRC reconfiguration complete message; and when a BWP with a parameter configuration abnormality is a BWP that needs to be currently activated, the UE may further determine whether a parameter item with a configuration abnormality is in a preset list.

In one scenario, the network side configures two BWPs (for example, BWP ID=1 and BWP ID=2) for the UE by using an RRC reconfiguration message, and both firstActiveDownlinkBWP and firstActiveUplinkBWP in the RRC reconfiguration message are configured to be a BWP1, that is, the RRC reconfiguration message carries firstActiveDownlinkBWP-Id 1 and firstActiveUplinkBWP-Id 1. That is, the network side instructs, by using the RRC reconfiguration message, the UE to use the BWP1 as a currently activated uplink or downlink BWP, while a BWP2 is not used as a currently activated BWP. It is assumed that a configuration for the BWP1 in the RRC reconfiguration message is normal on the network side, and a configuration for the BWP2 in the RRC reconfiguration message is abnormal.

According to the RRC reconfiguration message, a BWP (namely, the firstActiveDownlinkBWP and the firstActiveUplinkBWP) actually used by the UE is the normal BWP1 rather than the BWP2 with an abnormality. Although the network side configures two BWP IDs for the UE, the UE does not necessarily perform BWP switching in the future (that is, the UE does not necessarily use the BWP2 with an abnormality in the future). Therefore, during reconfiguration verification, the UE may determine a verification result as verification passed when the BWP1 is verified to be normal, and does not need to determine a verification result of the RRC reconfiguration message as verification failed due to the abnormality of the BWP2.

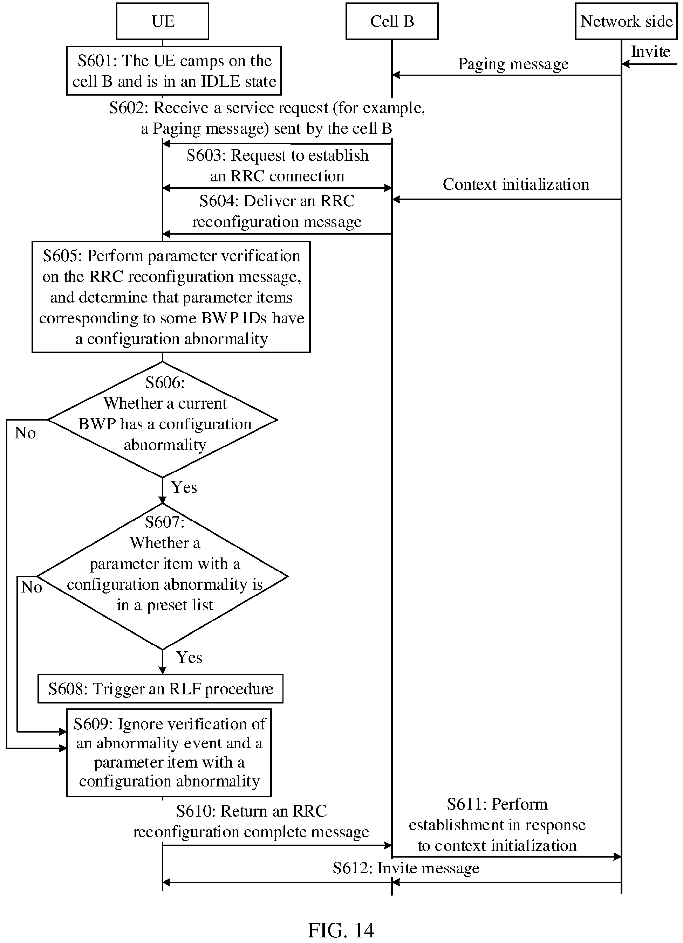

Specifically, as shown in FIG. 14, a signaling interaction procedure of still another example of a communication method in a wireless network according to an embodiment of this application may include the following steps.

S601: The UE camps on the cell B and is in an IDLE state.

The UE may camp on the cell B through cell search and access. It may be understood that the UE is in the IDLE state if the UE does not currently perform any communication service.

S602: The UE receives a service request sent by the cell B.

S603: The UE requests to establish an RRC connection with a network side (a core network).

The service request received by the UE may be, for example, a Paging message (paging message) received for paging the UE in a scenario in which there is an incoming call, and the Paging message may be a message generated after the network side receives an Invite message from a calling party. Then, the UE requests to establish an RRC connection with the network side (for example, a cell B in an NR network) to initialize context on the network side.

S604: The cell B delivers an RRC reconfiguration message to the UE.

S605: The UE performs parameter verification (verification may also be referred to as identification or a check) on the RRC reconfiguration message, and determines that parameter items corresponding to some BWP IDs in the RRC reconfiguration message have configuration abnormalities.

For example, the RRC reconfiguration message configures two BWPs (namely, a BWP1 and a BWP2) for the UE. It is assumed herein that parameters corresponding to some BWP IDs in the RRC reconfiguration message have configuration abnormalities. For example, parameters corresponding to the BWP2 have abnormalities.

The parameter configuration abnormality verified herein may be the configuration abnormality of the parameter item startingPRB of the pucch resource Id 40 of the BWP2 shown in FIG. 8.

S606: The UE determines whether a current BWP has a configuration abnormality, and performs S607 if the current BWP has a configuration abnormality, or performs S609 if the current BWP has no configuration abnormality.

The current BWP is a BWP to be used (or to be activated) by the UE, and the UE determines whether the current BWP has a configuration abnormality, that is, whether parameters corresponding to BWP IDs to be used by the UE (the BWP IDs to be used are the firstDownlinkActiveBWP-Id and the firstUplinkActiveBWP-Id) have configuration abnormalities. A modem in the UE may be used here to determine whether the parameters corresponding to the BWP IDs to be used by the UE have configuration abnormalities. For example, if a BWP to be used by the UE is configured as the BWP1, and as described above, a configuration of a parameter corresponding to the BWP1 is normal, then the UE may perform S609. After receiving the RRC reconfiguration message, the UE may be switched to the BWP1. For another example, if a BWP to be used by the UE is configured as the BWP2, and a parameter corresponding to the BWP2 has a configuration abnormality, then the UE may perform S607.

S607: The UE determines whether a parameter item pucch resource Id with a configuration abnormality is in a preset list, and performs S608 if the parameter item is in the preset list, or performs S609 if the parameter item is not in the preset list.

That is, the UE determines whether the determined parameter item pucch resource Id (for example, the pucch resource Id is equal to 40) with the configuration abnormality (that is, configuration information with an abnormality, for example, the configuration information corresponding to the startingPRB is abnormal) is in a resourceList (the preset list) of the resourceSetToAddModList.

S608: The UE does not return an RRC reconfiguration complete message to the cell B, and triggers an RLF procedure.

That is, if the parameter item pucch resource Id (for example, the pucch resource Id is equal to 40) with a configuration abnormality is in the preset list resourceList, the UE uses the parameter item in a subsequent service. Because a service failure most likely occurs if the parameter item has a configuration abnormality, the UE may consider that RRC reconfiguration fails. In this case, the UE may not return the RRC reconfiguration complete message to the cell B (the network side), and may trigger the RLF procedure.

S609: The UE ignores verification of abnormality events and parameter items with a configuration abnormality.

S610: The UE returns the RRC reconfiguration complete message to the cell B.

S611: The network side performs establishment in response to context initialization.

S612: The network side sends an Invite message to the UE, and a call service is normally performed.

That is, if the parameter item pucch resource Id with the configuration abnormality is not in the resourceList, the UE does not use the parameter item in a subsequent service. Even if the parameter item has the configuration abnormality, services of the UE are not affected. Therefore, the UE may ignore the configuration abnormality. In this case, the UE may normally return the RRC reconfiguration complete message. Because the parameter item pucch resource Id with the configuration abnormality is not used in a subsequent service of the UE, the subsequent service (for example, a call service in this embodiment of this application) of the UE may be normally performed.

In the foregoing implementation, when the UE receives a BWP that is configured on the network side and that includes a configuration abnormality, during reconfiguration verification, the UE may determine a verification result as verification passed when the BWP to be used (namely, the BWP1) is verified to be normal, and determine whether the parameter item pucch resource Id with the configuration abnormality is in the preset list when the BWP to be used is verified to be abnormal. If the parameter item pucch resource Id with the configuration abnormality is not in the preset list, the UE may normally return the RRC reconfiguration complete message, thereby ensuring that a current communication service is normally performed, and improving a success rate of the communication service.

It may be understood that procedures for interacting with the cell or the network side in the foregoing embodiments may be performed by using a modem in the UE. Then, the communication method in a wireless network provided in the embodiments of this application may be applied to a terminal device with a wireless network communication capability, such as a mobile phone, a tablet computer, a wearable device, a vehicle-mounted device, an ultra-mobile personal computer (ultra-mobile personal computer, UMPC), a netbook, or a personal digital assistant (personal digital assistant, PDA). A specific type of the terminal device is not limited in the embodiments of this application.

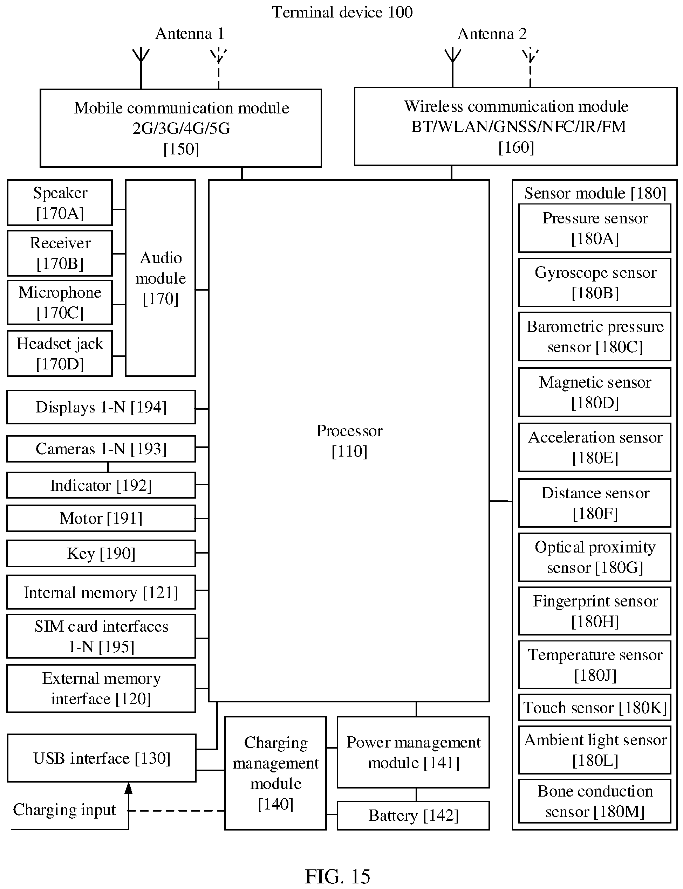

For example, FIG. 15 is a schematic diagram of a structure of an example of a terminal device 100 according to an embodiment of this application. For example, the terminal device 100 is a mobile phone. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem (modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

A wireless communication function of the terminal device 100 may be implemented by using the antenna 1, the antenna 2, the mobile communication module 150, the wireless communication module 160, the modem, the baseband processor, and the like.

The modem may include a modulator and a demodulator. The modulator is configured to modulate a to-be-sent low frequency baseband signal into a medium or high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem may be an independent device. In some other embodiments, the modem may be independent of the processor 110 and disposed in a same device as the mobile communication module 150 or another functional module.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

The internal memory 121 may be configured to store computer-executable program code, and the executable program code includes instructions. The executable program code includes instructions. The processor 110 performs various function applications and data processing of the terminal device 100 by running the instructions stored in the internal memory 121. The internal memory 121 may include a program storage area and a data storage area. The program storage area may store an operating system, an application required by at least one function (for example, a sound playback function or an image playback function), and the like. The data storage area may store data (such as audio data and a phone book) and the like created during use of the terminal device 100. In addition, the internal memory 121 may include a high-speed random access memory, and may further include a nonvolatile memory, for example, at least one magnetic disk storage device, a flash memory device, or a universal flash storage (universal flash storage, UFS).

It may be understood that the structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

A software system of the terminal device 100 may use a layered architecture, an event-driven architecture, a microkernel architecture, a micro-service architecture, or a cloud architecture. In embodiments of this application, an Android system with a layered architecture is used as an example to describe a software structure of the terminal device 100.

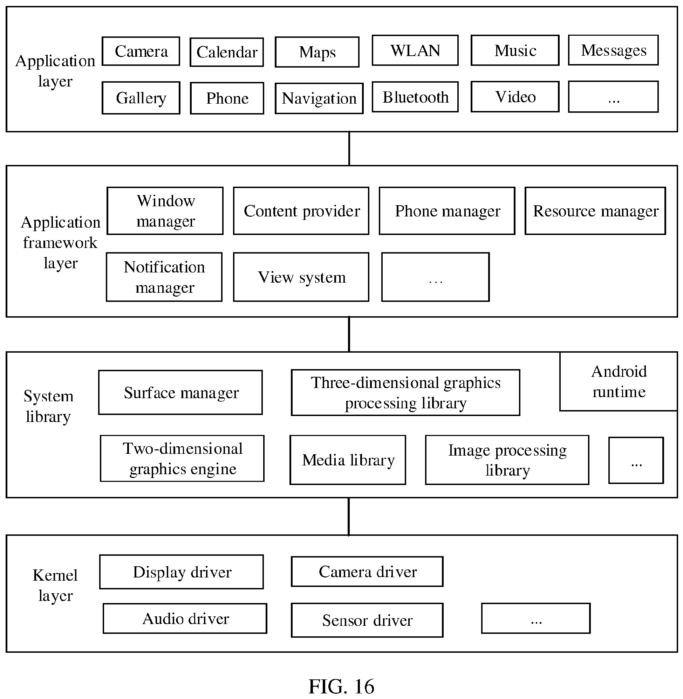

FIG. 16 is a block diagram of a software structure of a terminal device 100 according to an embodiment of this application. In the layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 16, the application packages may include applications such as Camera, Gallery, Calendar, Phone, Maps, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 16, the application framework layer may include a window manager, a content provider, a view system, a phone manager, a resource manager, a notification manager, and the like.

The window manager is configured to manage a window program. The window manager may obtain a size of the display, determine whether a status bar exists, lock a screen, capture a screenshot, and the like. The content provider is configured to store and obtain data, and enable the data to be accessible to an application. The view system includes visual controls such as a text display control and a picture display control. The phone manager is configured to provide a communication function of the terminal device 100, for example, call status management (including answering, hanging up, and the like). The resource manager provides various resources for an application, for example, a localized string, an icon, a picture, a layout file, and a video file. The notification manager enables an application to display notification information in the status bar, and may be configured to convey a notification-type message. The displayed notification information may automatically disappear after a short stay without user interaction.

The Android runtime includes a kernel library and a virtual machine. The Android runtime is responsible for scheduling and management of an Android system.

The kernel library includes two parts: functional functions that need to be invoked by a java language, and a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications. The media library supports playing and recording in a plurality of common audio and video formats, a still image file, and the like. The media library may support a plurality of audio and video encoding formats, for example, MPEG4, H.264, MP3, AAC, AMR, JPG, and PNG. The three-dimensional graphics processing library is configured to implement three-dimensional graphics drawing, image rendering and composition, layer processing, and the like. The 2D graphics engine is a drawing engine for 2D graphics drawing.

The kernel layer is a layer between hardware and software. The kernel layer includes at least a display driver, a camera driver, an audio driver, and a sensor driver.

The foregoing describes in detail examples of the communication method in a wireless network according to the embodiments of this application. It may be understood that, to implement the foregoing functions, the terminal device includes corresponding hardware and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on specific applications and design constraints of the technical solutions. A person skilled in the art may use different methods to implement the described functions with reference to embodiments for each particular application, but it should not be considered that the implementation goes beyond the scope of this application.

An embodiment of this application provides a terminal device. The terminal device has a function of implementing a behavior of the terminal device according to any one of the method embodiments. The function may be implemented by using hardware, or may be implemented by executing corresponding software by hardware. The hardware or the software includes one or more modules corresponding to subfunctions in the foregoing function. Specifically, the terminal device may be user equipment, such as a mobile phone.

An embodiment of this application further provides a communication system. The system includes the network device and the terminal device according to any one of the foregoing embodiments.

An embodiment of this application further provides a computer-readable storage medium. The computer-readable storage medium stores a computer program. When the computer program is executed by a computer, the method process related to a terminal device in any one of the foregoing method embodiments is implemented. Specifically, the computer may be the foregoing terminal device.

An embodiment of this application further provides a computer program or a computer program product including the computer program. When the computer program is executed by a computer, the computer is enabled to implement the method process related to a terminal device in any one of the foregoing method embodiments. Specifically, the computer may be the foregoing terminal device.

An embodiment of this application further provides a computer program or a computer program product including the computer program. When the computer program is executed by a computer, the computer is enabled to implement the method process related to a network device in any one of the foregoing method embodiments. Specifically, the computer may be the foregoing network device.

An embodiment of this application further provides an apparatus, applied to a terminal device. The apparatus is coupled to a memory and configured to read and execute instructions stored in the memory, to enable the terminal device to implement the method process related to a terminal device in any one of the foregoing method embodiments. The memory may be integrated in the processor, or may be independent of the processor. The apparatus may be a chip (such as a system on a chip SoC (System on a Chip)) on the terminal device.

It should be further understood that, the memory mentioned in the embodiments of the present invention may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memories described in this specification are intended to include, but are not limited to, these and any other proper types of memories.

In this application, "at least one" means one or more, and "a plurality of" means two or more. "At least one of the following items" or a similar expression thereof means any combination of these items, including a single item or any combination of a plurality of items. For example, "at least one of a, b, or c", or "at least one of a, b, and c" can both represent: a, b, c, a-b (that is, a and b), a-c, b-c, or a-b-c, where a, b, and c may be singular or plural.

It should be understood that, in various embodiments of this application, a sequence number of each of the foregoing processes does not mean a sequence of execution. Some or all of the steps may be performed in parallel or performed in sequence. The execution sequence of the processes should be determined based on functions and internal logic of the processes. When a terminal is specifically implemented, more or fewer steps than those illustrated in the embodiments of this application may be performed, and some steps may not be performed. No limitation should be imposed on an implementation process of the embodiments of this application.

A person of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

In the several embodiments provided in this application, it should be understood that the disclosed system, apparatus, and method may be implemented in another manner. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separated, and parts displayed as units may or may not be physical units, in other words, may be located in one place, or may be distributed on a plurality of network units. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the portion contributing to the conventional technology, or some of the technical solutions may be embodied in a form of a software product. The computer software product is stored in a storage medium, and includes several instructions for instructing a computer device (which may be a personal computer, a server, a network device, a terminal device, or the like) to perform all or some of the steps of the methods described in the embodiments of this application.

The apparatus structure diagram provided in each apparatus embodiment of the present invention shows only a simplified design of a corresponding apparatus. In actual application, the apparatus may include any quantity of transmitters, receivers, processors, memories, and the like, to implement functions or operations performed by the apparatus in each apparatus embodiment of the present invention, and all apparatuses that can implement this application fall within the protection scope of this application.

Terms used in the embodiments of the present invention are merely for the purpose of describing specific embodiments, but are not intended to limit the present invention. Terms "a", "the", and "this" in singular forms in embodiments of the present invention and the appended claims are also intended to include plural forms, unless otherwise stated in the context clearly. It should be further understood that the term "and/or" used in this specification indicates and includes any or all possible combinations of one or more associated items listed. The character "/" in this specification usually represents an "or" relationship between associated objects.

Depending on the context, the word "if" as used herein may be interpreted as "when...", "once... ", "in response to determining", or "in response to detecting". Similarly, depending on the context, the phrase "if determining..." or "if detecting (a stated condition or event)" may be interpreted as a meaning of "when determining...", "in response to determining...", "when detecting (a stated condition or event)", or "in response to detecting... (a stated condition or event)".

A person of ordinary skill in the art may understand that all or some of the steps of the methods in the foregoing embodiments may be implemented by using a program instructing related hardware. The program may be stored in a device-readable storage medium. When the program is executed, all or some of the steps are included. Examples of the storage medium include FLASH, EEPROM, or the like.

The objectives, technical solutions, and beneficial effects of the present invention are further described in detail in the foregoing specific implementations. It should be understood that different embodiments may be combined, the foregoing descriptions are merely specific implementations of the present invention, but are not intended to limit the protection scope of the present invention. Any combination, modification, equivalent replacement, or improvement made within the spirit and principle of the present invention shall fall within the protection scope of the present invention.

## Claims

1. A communication method in a wireless network, comprising:
receiving, by a terminal device, a radio resource control RRC reconfiguration message sent by a first cell belonging to a first wireless network, wherein the RRC reconfiguration message carries first configuration information, and the first configuration information comprises a second parameter item with a configuration abnormality; and
triggering, by the terminal device, a radio link failure RLF procedure when the second parameter item exists in a preset list in the RRC reconfiguration message; or
sending, by the terminal device, an RRC reconfiguration complete message in response to the RRC reconfiguration message to the first cell when the second parameter item does not exist in a preset list in the RRC reconfiguration message.

2. The method according to claim 1, wherein that the first configuration information comprises the second parameter item with a configuration abnormality comprises: configuration information corresponding to the second parameter item comprises a first parameter item, and the first parameter item is a parameter item with a configuration abnormality.

3. The method according to claim 1 or 2, wherein the first configuration information comprises configuration information corresponding to a first bandwidth part BWP, and the configuration information corresponding to the first BWP comprises the second parameter item.

4. The method according to claim 3, wherein the first BWP is a BWP whose BWP ID is a second value.

5. The method according to any one of claims 1 to 4, wherein the second parameter item is a first pucch resource Id, and a pucch resource Id corresponding to the first pucch resource Id is a first value.

6. The method according to claim 2, wherein the first parameter item is a startingPRB field with a configuration abnormality, and the startingPRB field with a configuration abnormality is a corresponding startingPRB field when a pucch resource Id in the first configuration information is a first value.

7. The method according to any one of claims 1 to 6, wherein the preset list is a parameter list comprised in a resource list resourceList field, and the resourceList field is located in a resourceSetToAddModList field in the RRC reconfiguration message.

8. The method according to any one of claims 1 to 7, wherein after the receiving, by a terminal device, a radio resource control RRC reconfiguration message sent by a first cell belonging to a first wireless network, the method further comprises: verifying, by the terminal device, the RRC reconfiguration message;
the triggering, by the terminal device, an RLF procedure when the second parameter item exists in a preset list in the RRC reconfiguration message comprises:
triggering, by the terminal device, the RLF procedure if the second parameter item exists in the preset list in the RRC reconfiguration message when the terminal device verifies that a configuration corresponding to the second parameter item is abnormal; and
the sending, by the terminal device, an RRC reconfiguration complete message in response to the RRC reconfiguration message to the first cell when the second parameter item does not exist in the preset list in the RRC reconfiguration message comprises:
sending, by the terminal device, the RRC reconfiguration complete message to the first cell if the second parameter item does not exist in the preset list in the RRC reconfiguration message when the terminal device verifies that the configuration corresponding to the second parameter item is abnormal.

9. The method according to any one of claims 1 to 7, wherein the triggering, by the terminal device, an RLF procedure when the second parameter item exists in a preset list in the RRC reconfiguration message comprises:
verifying, by the terminal device, the configuration corresponding to the second parameter item when the second parameter item exists in the preset list in the RRC reconfiguration message, and triggering, by the terminal device, an RLF procedure when it is verified that the configuration corresponding to the second parameter item is abnormal; and
the sending, by the terminal device, an RRC reconfiguration complete message in response to the RRC reconfiguration message to the first cell when the second parameter item does not exist in the preset list in the RRC reconfiguration message comprises:
when the second parameter item does not exist in the preset list in the RRC reconfiguration message, ignoring, by the terminal device, verification of the configuration corresponding to the second parameter item, and sending, by the terminal device, the RRC reconfiguration complete message to the first cell.

10. The method according to any one of claims 1 to 7, wherein the sending, by the terminal device, an RRC reconfiguration complete message in response to the RRC reconfiguration message to the first cell when the second parameter item does not exist in the preset list in the RRC reconfiguration message comprises:
sending, by the terminal device, the RRC reconfiguration complete message to the first cell when the second parameter item does not exist in the preset list in the RRC reconfiguration message and the terminal device is currently establishing a call.

11. The method according to claim 10, wherein the method further comprises:
triggering, by the terminal device, an RLF procedure when the second parameter item does not exist in the preset list in the RRC reconfiguration message and the terminal device is not currently establishing a call.

12. The method according to any one of claims 1 to 7, wherein the triggering, by the terminal device, an RLF procedure when the second parameter item exists in a preset list in the RRC reconfiguration message comprises:
when the second parameter item exists in the preset list in the RRC reconfiguration message and a quantity of abnormalities in the first configuration information sent by the first cell exceeds a preset threshold, triggering, by the terminal device, the RLF procedure, and barring selection of the first cell as a serving cell in preset duration.

13. The method according to any one of claims 1 to 12, wherein the first wireless network is a 5G network.

14. The method according to any one of claims 1 to 13, wherein the receiving, by a terminal device, a radio resource control RRC reconfiguration message sent by a first cell belonging to a first wireless network comprises:
receiving, by the terminal device, the RRC reconfiguration message sent by the first cell after receiving a Paging message sent by the first cell, wherein the Paging message is used to page the terminal device when there is an incoming call.

15. The method according to claim 3 or 4, wherein the first BWP is a BWP that needs to be currently activated and that is configured by the first cell for the terminal device.

16. The method according to claim 3 or 4, wherein the first BWP is a BWP that does not need to be currently activated and that is configured by the first cell for the terminal device.

17. The method according to any one of claims 1 to 16, wherein the second parameter item is a parameter item in a configuration list of a first type in the first configuration information.

18. The method according to claim 17, wherein the configuration list of the first type is a list corresponding to a resourceToAddModList field.

19. A terminal device, wherein the terminal device comprises:
a memory, configured to store instructions; and
a processor, configured to invoke and execute the instructions in the memory, to enable the terminal device to perform the method according to any one of claims 1 to 18.

20. A chip system, wherein the chip system comprises a processing circuit, a receive pin, and a transmit pin, wherein the receive pin, the transmit pin, and the processing circuit communicate with each other through an internal connection path, and the processing circuit performs the method according to any one of claims 1 to 18 to control the receive pin to receive a signal and control the transmit pin to send a signal.

21. A chip system, wherein the chip system comprises a processor, configured to support a terminal device in implementing the method according to any one of claims 1 to 18.
